# EUROPEAN PATENT APPLICATION

(11) **EP 4 242 947 A1**
(43) Date of publication of application: **13.09.2023**
(21) Application number: 23700377.7
(22) Date of filing: 11.01.2023
(51) Int. Cl.: G06Q 20/04, G06Q 20/32, G06F 3/0481

(54) **ELECTRONIC DEVICE, METHOD, AND NON-TRANSITORY COMPUTER-READABLE STORAGE MEDIUM FOR DISPLAYING VISUAL OBJECT COMPRISING INTEGRATED INFORMATION OF PLURALITY OF ELECTRONIC TICKETS**

(30) Priority: 27.01.2022 KR 20220011929
(71) Applicant: Samsung Electronics Co., Ltd., Suwon-si, Gyeonggi-do 16677 (KR)
(72) Inventor: LEE, Chaekyung, Suwon-si, Gyeonggi-do 16677 (KR); KIM, Sungman, Suwon-si, Gyeonggi-do 16677 (KR); KIM, Leebin, Suwon-si, Gyeonggi-do 16677 (KR); LIM, Choonsoo, Suwon-si, Gyeonggi-do 16677 (KR)
(74) Representative: Nederlandsch Octrooibureau
(86) International application number: PCT/KR2023/000528
(87) International publication number: WO 2023/146167

(57) **Abstract**

According to an embodiment, a method for operating an electronic device including a display is provided. The method includes identifying that multiple electronic tickets for multiple users is registered in a second software application, the multiple electronic tickets issued through a first software application. The method includes executing the second software application after the identification. The method includes displaying, based on the execution of the second software application, a visual object for providing the multiple electronic tickets in a user interface of the second software application, wherein the visual object includes integration information for the multiple electronic tickets in the user interface of the second software application, via the display.

## Description

### [Technical Field]

The following descriptions relate to an electronic device, a method, and a non-transitory computer-readable storage medium for displaying a visual object including integration information for multiple electronic tickets.

### [Background Art]

Electronic devices such as a smartphone, a tablet, a laptop computer, or a smart watch may store various software applications. For example, the electronic device may store a software application that organizes tickets such as a credit card, a debit card, a transit pass, a boarding pass, an identity card, a reward card and the like, into an electronic ticket to enhance security or convenience. For example, the software application may be referred to as a wallet software application.

### [Disclosure]

### [Technical Solution]

According to an embodiment, an electronic device may include a display, a memory configured to store instructions, and a processor. The processor may be configured to, when the instructions are executed, identify that multiple electronic tickets for multiple users is registered in a second software application, the multiple electronic tickets issued through a first software application. The processor may be configured to, when the instructions are executed, execute the second software application after the identification. The processor may be configured to, when the instructions are executed, display, based on the execution of the second software application, a visual object for providing the multiple electronic tickets in a user interface of the second software application via the display, wherein the visual object includes integration information for the multiple electronic tickets in the user interface of the second software application.

According to an embodiment, a method for operating an electronic device including a display may be provided. The method may include identifying that multiple electronic tickets for multiple users is registered in a second software application, the multiple electronic tickets issued through a first software application. The method may include executing the second software application after the identification. The method may include displaying, based on the execution of the second software application, a visual object for providing the multiple electronic tickets in a user interface of the second software application via the display, wherein the visual object includes integration information for the multiple electronic tickets in the user interface of the second software application.

According to an embodiment, a non-transitory computer readable storage medium may store one or more programs, the one or more programs comprising instructions which, when executed by a processor of an electronic device including display, cause the electronic device to identify that multiple electronic tickets for multiple users is registered in a second software application, the multiple electronic tickets issued through a first software application. The one or more programs may comprise instructions which, when executed by the processor, cause the electronic device to execute the second software application after the identification. The one or more programs may comprise instructions which, when executed by the processor, cause the electronic device to display, based on the execution of the second software application, a visual object for providing the multiple electronic tickets in a user interface of the second software application via the display, wherein the visual object includes integration information for the multiple electronic tickets in the user interface of the second software application.

### [Description of the Drawings]

FIG. 1 illustrates an exemplary electronic device capable of performing operations described in the present document.
FIG. 2A is a flowchart illustrating a method of displaying a visual object or another visual object according to an embodiment.
FIG. 2B is a flowchart illustrating a method of displaying a visual object according to an embodiment.
FIG. 3 illustrates an example of a visual object displayed according to an embodiment.
FIG. 4 illustrates an example of a shape of a visual object displayed according to an embodiment or a visual affordance in the visual object.
FIG. 5 is a flowchart illustrating a method of displaying another visual object according to an embodiment.
FIG. 6 illustrates an example of another visual object displayed according to an embodiment.
FIG. 7 is a flowchart illustrating a method of identifying whether multiple electronic tickets are associated with each other according to an embodiment.
FIG. 8 is a flowchart illustrating a method of identifying whether multiple electronic boarding passes are associated with each other according to an embodiment.
FIG. 9 is a flowchart illustrating a method of displaying data in response to an input to a visual object, according to an embodiment.
FIGS. 10 and 11 illustrate examples of data displayed in response to an input to a visual object according to an embodiment.
FIG. 12 is a flowchart illustrating a method of displaying data in response to an input to an executable object displayed together with a visual object, according to an embodiment.
FIG. 13 illustrates an example of data displayed in response to an input to an executable object displayed together with a visual object, according to an embodiment.
FIG. 14 is a flowchart illustrating a method of transmitting information on multiple electronic tickets registered in a second software application to a plurality of other electronic devices, according to an embodiment.
FIG. 15 illustrates an example of a user interface of a third software application displayed according to an embodiment.
FIG. 16 is a flowchart illustrating a method of displaying a visual object including thumbnail images, according to an embodiment.
FIG. 17 is a flowchart illustrating a method of displaying a visual object including a visual element indicating a change in a state of at least portion of multiple electronic tickets, according to an embodiment.
FIG. 18A illustrates an example of a visual object including a visual element indicating a change in a state of at least portion of multiple electronic tickets displayed according to an embodiment.
FIG. 18B illustrates an example of another visual object having a changed state displayed in another electronic device, according to an embodiment.
FIG. 19 is a flowchart illustrating a method of displaying an executable object with a visual object to provide another electronic ticket related to at least portion of multiple electronic tickets, according to an embodiment.
FIG. 20 illustrates an example of another visual object displayed together with a visual object, according to an embodiment.
FIG. 21 is a flowchart illustrating a method of adaptively displaying a visual object or displaying another visual object, according to an embodiment.
FIG. 22 illustrates an example of a visual object and another visual object adaptively displayed according to an embodiment.
FIG. 23 is a flowchart illustrating a method of displaying another visual object together with a visual object, according to an embodiment.
FIG. 24 illustrates an example of another visual object displayed together with a visual object according to an embodiment.

### [Mode for Invention]

Multiple electronic tickets registered in the software application stored in the electronic device may be associated with each other. For example, since the multiple electronic tickets may have common data, a situation in which a second electronic ticket among the multiple electronic tickets is provided via a user application right after a first electronic ticket among the multiple electronic tickets is provided via the software application may frequently occur. Accordingly, a method for quickly accessing the multiple electronic tickets may be required.

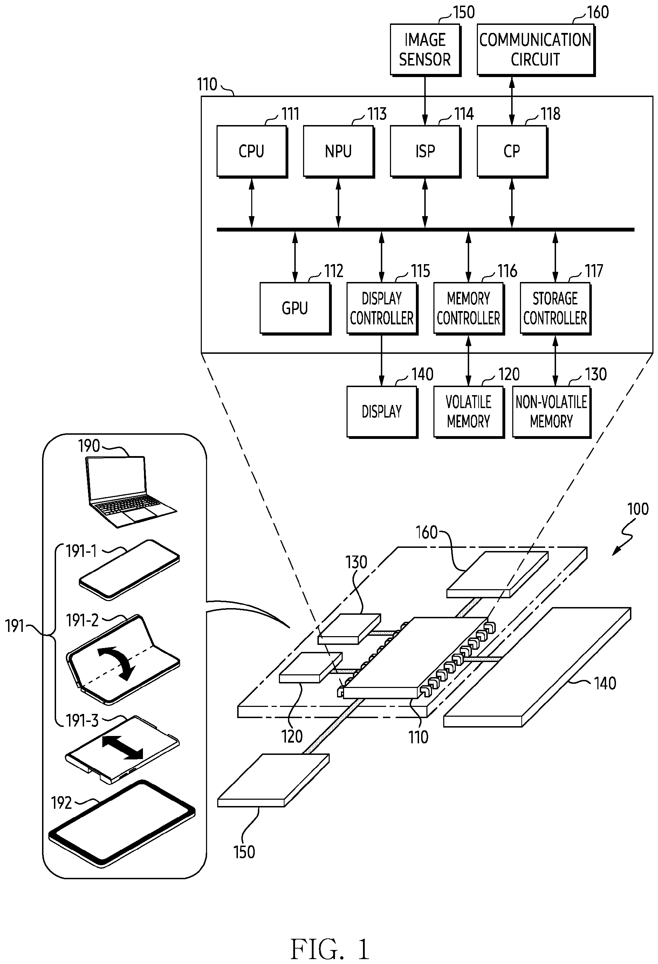

FIG. 1 illustrates an exemplary electronic device capable of performing operations described in the present document.

Referring to FIG. 1, an electronic device 100 may be various types of mobile devices such as a laptop 190, a smart phone 191 of various form factors, a tablet 192, a cellular phone, and other similar computing devices. Components illustrated in FIG. 1, their relationships, and their functions are only illustrative and do not limit the implementations described or claimed in this document. The electronic device 100 may be referred to as a user device, a multifunctional device, or a portable device.

The electronic device 100 may include components including a processor 110, a volatile memory 120, a non-volatile memory 130, a display 140, an image sensor 150, and a communication circuit 160. The components are only illustrative. For example, the electronic device 100 may include other components (e.g., a power management integrated circuit (PMIC), an audio processing circuit, or an input/output interface). For example, some components may be omitted from the electronic device 100.

The processor 110 may be implemented with one or more integrated circuit (IC) chips and may execute various data processes. For example, the processor 110 may be implemented as a system on chip (SoC) (e.g., one chip or chipset). The processor 110 may include sub-components including a central processing unit (CPU) 111, a graphics processing unit (GPU) 112, a neural processing unit (NPU) 113, and an image signal processor (ISP) 114, a display controller 115, a memory controller 116, a storage controller 117, and/or a communication processor (CP) 118. The sub-components are only illustrative. For example, the processor 110 may further include other sub-components. For example, some sub-components may be omitted from the processor 110.

The CPU 111 may be configured to control the sub-components based on execution of instructions. The GPU 112 may include a circuit configured to executed parallel computations (e.g., rendering). The NPU 113 may include a circuit configured to executed computations for machine learning (e.g., convolution computation). The ISP 114 may include a circuit configured to process a raw image obtained through the image sensor 150 in a format suitable for components in the electronic device 100 or sub-components in the processor 110. The display controller 115 may include a circuit configured to process an image obtained from the CPU 111, the GPU 112, the ISP 114, or the volatile memory 120 in a format suitable for the display 140. The memory controller 116 may include a circuit configured to control reading data from the volatile memory 120 and recording of the data in the volatile memory 120. The storage controller 117 may include a circuit configured to control reading data from the nonvolatile memory 130 and recording of the data in the nonvolatile memory 130. The CP 118 may include a circuit configured to process data obtained from the sub-component in the processor 110 in a suitable format for transmission to another electronic device through the communication circuit 160 or to process data obtained through the communication circuit 160 from another electronic device in a suitable format for processing the sub-component.

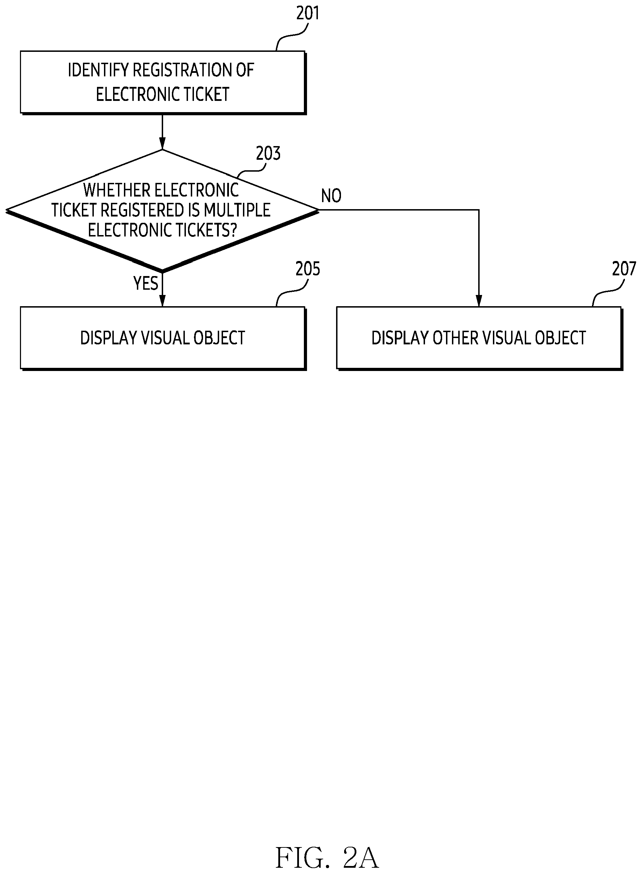

FIG. 2A is a flowchart illustrating a method of displaying a visual object or another visual object according to an embodiment. This method may be executed by the electronic device 100 illustrated in FIG. 1 or the processor 110 in the electronic device 100.

Referring to FIG. 2A, in operation 201, the processor 110 may identify that an electronic ticket issued through the first software application is registered in the second software application. For example, the first software application may be a software application distributed by at least one service provider that provides a service related to an electronic ticket. For example, the first software application may be a software application for payment of an electronic ticket. For example, the first software application may be a software application for inquiring an electronic ticket. For example, the first software application may be a software application for capturing or cropping an electronic ticket. For example, the first software application may be a software application for displaying an image corresponding to an electronic ticket on the display 140.

For example, the second software application may be a software application for organizing, managing, or storing an electronic ticket. For example, the second software application may be a software application for inquiring, calling, or displaying different types of electronic tickets within a single user interface. For example, the second software application may be an electronic wallet software application. However, it is not limited thereto.

In an embodiment, the processor 110 may obtain information predetermined from the first software application through the second software application. For example, the information may include data indicating that a user input to an executable object included in the user interface of the first software application is detected. However, it is not limited thereto. Based on the information, the processor 110 may identify that an electronic ticket issued through the first software application is registered in the second software application. However, it is not limited thereto.

In operation 203, the processor 110 may identify whether or not a plurality of electronic tickets (i.e., multiple electronic tickets) are registered in the second software application based on the identification.

For example, based on information provided from the first software application to the second software application, the processor 110 may identify whether or not multiple electronic tickets are registered in the second software application. For example, based on information provided from an external electronic device related to the first software application to the second software application, the processor 110 may identify whether or not multiple electronic tickets are registered in the second software application. For example, based on information provided from an external electronic device related to the second software application to the electronic device 100, the processor 110 may identify whether or not multiple electronic tickets registered in the second software application. For example, the external electronic device related to the second software application may transmit the information to the electronic device 100, based on receiving data indicating that an electronic ticket is issued from the external electronic device related to the first software application. However, it is not limited thereto.

For example, the multiple electronic tickets may be two or more electronic tickets. For example, the multiple electronic tickets may be groups of two or more electronic tickets. For example, the multiple electronic tickets may include at least one first electronic ticket in a first group and at least one second electronic ticket in a second group. For example, the multiple electronic tickets may not mean that the number of pages of the electronic tickets is plural, but may mean electronic tickets that may be grouped through a visual object to be described later through the description of operation 205. In other words, in operation 203, the processor 110 may identify whether the electronic tickets registered in the second software application are electronic tickets with attributes that may be grouped.

For examples, the multiple electronic tickets may be electronic tickets such that right or authority assigned to the multiple electronic tickets may be exercised in the same or similar place. The multiple electronic tickets may be electronic tickets having the same or similar schedule in which the right or authority may be exercised. The multiple electronic tickets may be electronic tickets issued through a single payment. The multiple electronic tickets may be electronic tickets issued during a predetermined time period (e.g., one day, one month, or one year). The multiple electronic tickets may be electronic tickets issued for a single user. The multiple electronic tickets may be electronic tickets issued for multiple users. However, it is not limited thereto.

The processor 110 may execute operation 205 under the condition that the electronic tickets registered in the second software application are multiple electronic tickets, and execute operation 207 under the condition that the electronic ticket registered in the second software application is a single electronic ticket.

In operation 205, the processor 110 may display a visual object for inquiring the multiple electronic tickets through a user interface of the second software application within the user interface based on identifying that the multiple electronic tickets are registered in the second software application. The visual object may include integration information of the multiple electronic tickets. For example, the integration information may be information that summarizes information included in the multiple electronic tickets. For example, the integration information may have some information among the multiple electronic tickets in common (hereinafter "common information" or "common data"). For example, the integration information may be all information included in the multiple electronic tickets. For example, the integration information may be a portion of information included in the multiple electronic tickets. However, it is not limited thereto.

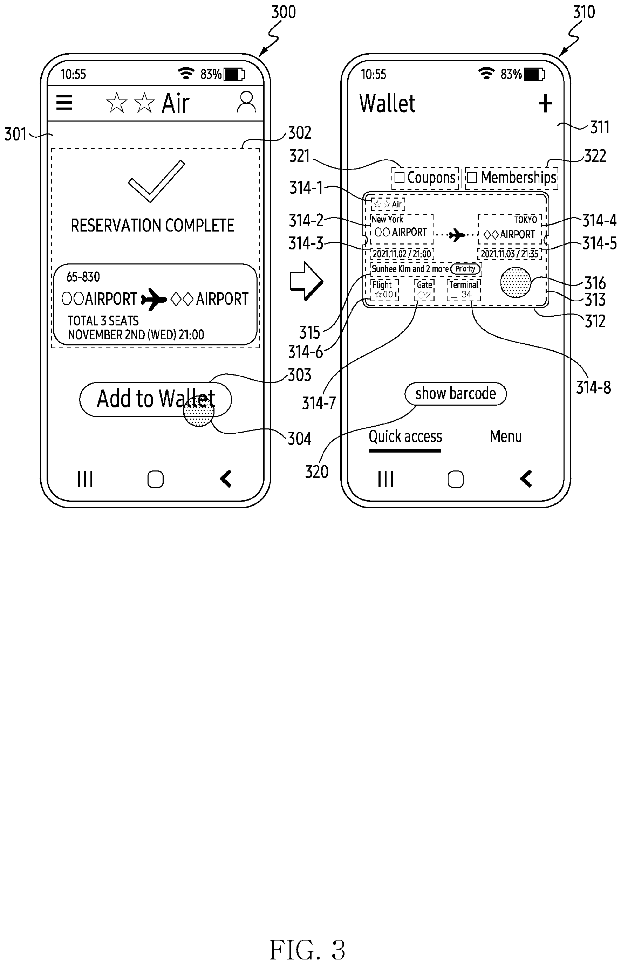

For example, the visual object may be configured to display at least a portion of the multiple electronic tickets within the user interface in response to a user input to the visual object. In other words, the visual object may be an object configured to execute a predefined function in response to the user input. Meanwhile, the visual object will be further illustrated through the description of FIG. 3.

In an embodiment, when a single electronic ticket is registered in the second software application before the multiple electronic tickets are registered in the second software application, the processor 110 may display the visual object in the user interface together with another visual object to be illustrated through the description of operation 207. In other words, according to the use state of the second software application, the processor 110 may display both the visual object for inquiring the multiple electronic tickets and the other visual object for inquiring the single electronic ticket within the user interface. In this regard, the term "visual object" is used for indicating or related to "multiple electronic tickets" and the term "another (or the other) visual object" is used for indicating or related to "single electronic ticket" in the description.

In operation 207, based on identifying that a single electronic ticket is registered in the second software application, the processor 110 may display another visual object for inquiring the single electronic ticket through the second software application within the user interface. The other visual object may include information of the single electronic ticket.

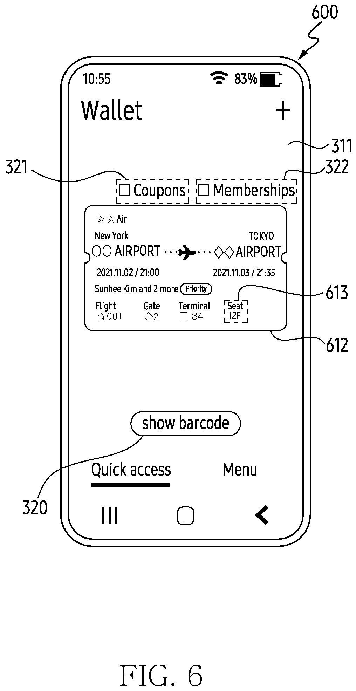

For example, the other visual object may include information of one electronic ticket, unlike the visual object. For example, the other visual object may be configured to display at least a portion of the single electronic ticket within the user interface in response to a user input to the other visual object. In other words, the other visual object may be an object configured to execute a predefined function in response to the user input. Meanwhile, the other visual object will be further illustrated through the description of FIG. 6.

In an embodiment, when the multiple electronic tickets are registered in the second software application before the single electronic ticket is registered in the second software application, the processor 110 may display the other visual object together with the visual object in the user interface. In other words, according to the use state of the second software application, the processor 110 may display both the visual object for inquiring the multiple electronic tickets and the other visual object for inquiring the single electronic ticket within the user interface.

As described above, the electronic device 100 may display the visual object based on identifying that the multiple electronic tickets are registered in the second software application, in order to provide an inquiry of the multiple electronic tickets through a reduced number of user inputs instead of inquiring the multiple electronic tickets through multiple user inputs for the use of the multiple electronic tickets. The electronic device 100 may enhance user convenience through display of the visual object.

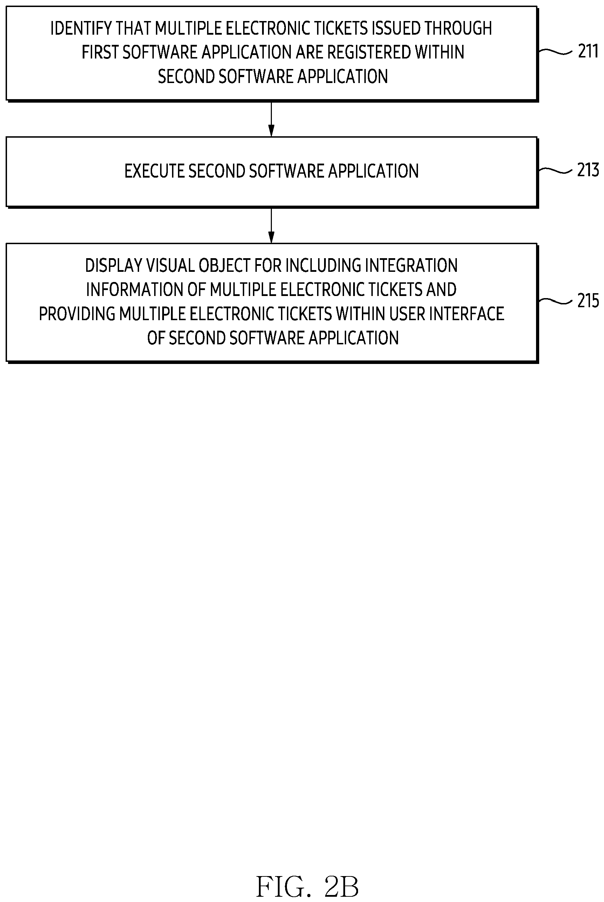

FIG. 2B is a flowchart illustrating a method of displaying a visual object according to an embodiment. This method may be executed by the electronic device 100 illustrated in FIG. 1 or the processor 110 in the electronic device 100.

FIG. 3 illustrates an example of a visual object displayed according to an embodiment.

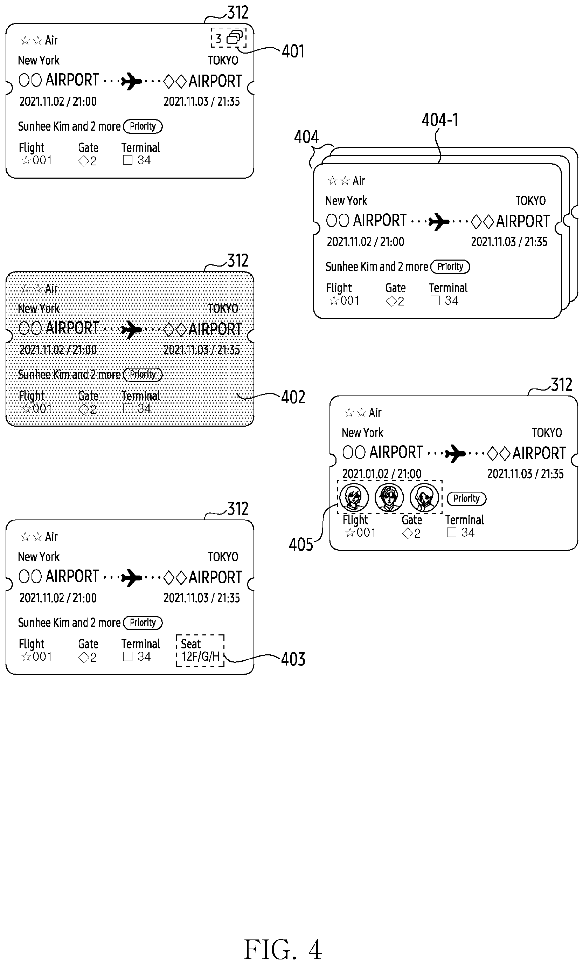

FIG. 4 illustrates an example of a shape of a visual object displayed according to an embodiment or a visual affordance in the visual object.

Referring to FIG. 2B, in operation 211, the processor 110 may identify that multiple electronic tickets issued through the first software application are registered within the second software application.

For example, the first software application may be a software application used to issue the multiple electronic tickets. For example, the first software application may be a software application distributed by at least one service provider that provides services related to the multiple electronic tickets. For example, the first software application may be a software application for payment of the multiple electronic tickets. For example, the first software application may be a software application for inquiring the multiple electronic tickets. For example, the first software application may be a software application for capturing or cropping the multiple electronic tickets. For example, the first software application may be a software application for displaying an image corresponding to an electronic ticket on the display 140. For example, the first software application may include an Internet browser, a software application for electronic payment, a software application for electronic ticket reservation, an image capturing software application, and/or a gallery software application. However, it is not limited thereto.

For example, the first software application may be installed in the electronic device 100 or may be installed in another electronic device distinguished from the electronic device 100.

For example, the multiple electronic tickets may be variously defined. For example, the multiple electronic tickets may be multiple electronic tickets for a single user. For example, the multiple electronic tickets may be multiple electronic tickets for multiple users. For example, the multiple electronic tickets may be electronic tickets within a plurality of groups. For example, the registration of multiple electronic tickets in the second software application may mean that electronic tickets with an attribute that may be inquired through one visual object (e.g., a visual object described later through operation 215) are registered in the second software application. However, it is not limited thereto.

In an embodiment, each of the multiple electronic tickets may be an electronic ticket provided for exercising or obtaining a predetermined or predefined right or authority. For example, each of the multiple electronic tickets may be an electronic boarding pass, an electronic public transportation pass, an electronic entering ticket (e.g., an electronic show ticket or an electronic movie ticket), an electronic credit card, an electronic debit card, an electronic reward card, an electronic exchange card, an electronic key, or an electronic vaccine pass. However, it is not limited thereto. In an embodiment, each of the multiple electronic tickets may be an electronic ticket for authenticating a user. For example, each of the multiple electronic tickets may be an ID, an authorized certificate, or an electronic vaccine pass. However, it is not limited thereto.

For example, each of the multiple electronic tickets may have a format that may be displayed on a display (e.g., display 140). For example, each of the multiple electronic tickets may be distinguished from a physical ticket printed on paper or plastic. However, it is not limited thereto.

For example, the multiple electronic tickets may be respectively issued using different electronic devices through different processes. For example, a first electronic ticket among the multiple electronic tickets may be issued through a first process using the first software application stored in the electronic device 100, and a second electronic ticket among the multiple electronic tickets may be issued through a second process using the first software application (or other software application) stored in an external electronic device distinguished from the electronic device 100.

For example, the multiple electronic tickets may be issued through a single processor. For example, all of the multiple electronic tickets may be issued through the first process using the first software application stored in the electronic device 100.

For example, each of the multiple electronic tickets may be an electronic ticket issued for each of the multiple users. For example, a first electronic ticket among the multiple electronic tickets may be an electronic ticket issued for a first user among the multiple users, and a second electronic ticket of the multiple electronic tickets may be an electronic ticket issued for a second user of the multiple users. For example, the first electronic ticket may be a ticket available only to the first user among the multiple users, and the second electronic ticket may be a ticket available only to the second user among the multiple users. For example, the use of the second electronic ticket by the first user may be limited, and the use of the first electronic ticket by the second user may be limited. However, it is not limited thereto.

For example, the multiple electronic tickets may have common data. For example, the multiple electronic tickets may be multiple electronic boarding passes issued for the same flight journey. For example, the multiple electronic boarding passes may have data on departure location, arrival location, departure time, arrival time, flight number, gate, and terminal as the common data. As another example, the multiple electronic tickets may be multiple electronic public transportation passes. For example, the multiple electronic public transportation passes may have data on departure time, departure location, and unique number of the public transportation as the common data. As still another example, the multiple electronic tickets may be multiple electronic entering tickets for the same event. For example, the multiple electronic entering tickets may have data on event name, event start time, and event place as the common data. As still another example, the multiple electronic tickets may be multiple vaccine passes. For example, the multiple vaccine passes may have data on disease name as the common data. However, it is not limited thereto.

For example, each of the multiple electronic tickets may have unique data. For example, unique data in the first electronic ticket among the multiple electronic tickets may be different from unique data in the second electronic ticket among the multiple electronic tickets. For example, the unique data in the first electronic ticket may be included only in the first electronic ticket among the multiple electronic tickets, and the unique data in the second electronic ticket may be included only in the second electronic ticket among the multiple electronic tickets. For example, the unique data in the first electronic ticket may not be included in the second electronic ticket, and the unique data in the second electronic ticket may not be included in the first electronic ticket. For example, when the multiple electronic tickets are multiple electronic boarding passes, the first electronic ticket may include identification information of the first user, such as the name of the first user, as the unique data, and the second electronic ticket may include identification information of the second user, such as the name of the second user, as the unique data. However, it is not limited thereto. For example, each of the multiple electronic tickets may include only the common data and may not include the unique data.

In an embodiment, the common data and the unique data may be changed according to a situation. For example, when the first electronic boarding pass having a first departure location (and/or first arrival location) and a first flight journey, and the second electronic boarding pass having a second departure location (and/or second arrival location) different from the first departure location and a second flight journey different from the first flight journey are issued or paid together, the processor 110 may identify the data on the first departure location (and/or first arrival location) and the first flight journey as the unique data of the first electronic boarding pass, and identify the data on the second departure location (and/or the second arrival location) and the second flight journey as the unique data of the second electronic boarding pass. For another example, when a first electronic ticket for a first event related to a first location and a second electronic ticket for a second event related to a second location that has the same schedule as the first electronic ticket but is different from the first location are issued or paid together, the processor 110 may identify data on the first location and the name of the first event as the unique data of the first electronic ticket, identify data on the second location and the name of the second event as the unique data of the second electronic ticket, and identify data on the schedule of the first event and the schedule of the second event as common data on the first electronic ticket and the second electronic ticket.

According to embodiments, each of the multiple electronic tickets may include the common data and the unique data within a single data. For example, when the multiple electronic tickets are multiple electronic boarding passes, each of the first electronic ticket and the second electronic ticket may include a barcode. For example, the bar code may be used for check-in. For example, the bar code in the first electronic ticket includes not only the unique data for the first user, such as the first user's identification information, the first user's seat information, and the first user's physical characteristic information, but also information on the same flight journey as the second user's flight journey, which is the common data, and the bar code in the second electronic ticket may include not only the unique data for the second user, such as the second user's identification information, the second user's seat information, and the second user's physical characteristic information, but also information on the same flight journey as the first user's flight journey, which is the common data. For example, each of the barcode in the first electronic ticket and the barcode in the second electronic ticket may be a QR code configured in the form of a two-dimensional matrix. However, it is not limited thereto.

For example, the second software application may be a software application for organizing, managing, or storing the multiple electronic tickets. For example, the second software application may be referred to as an electronic wallet software application in terms of providing a user experience such as storing multiple electronic tickets in a wallet. However, it is not limited thereto.

For example, the second software application may provide various guide services. For example, based on identifying that a predefined or predetermined condition is satisfied, the second software application may provide guide information such as notification so that information on at least portion of the multiple electronic tickets may be displayed through the display 140 in the electronic device 100. For example, when the multiple electronic tickets are multiple electronic boarding passes, under the condition that the electronic device 100 is located within a specified distance from the departure location, the second software application may cause the electronic device 100 to display an executable object (e.g., notification) for quick access capable of calling the multiple electronic boarding passes through the display 140. For example, when the multiple electronic tickets are multiple electronic boarding passes, under the conditions that a schedule corresponding to the common flight journey of the multiple electronic boarding passes initiates, the second software application may cause the electronic device 100 to display an executable object (e.g., notification) for quick access through the display 140. For another example, the second software application may be linked to a software application for schedule management. However, it is not limited thereto.

For example, the identification of the registration may be performed through various methods. The registration may be identified by the second software application based on information provided from the first software application to the second software application. The registration may be identified by an operating system (OS) used to transfer the information from the first software application to the second software application. The registration may be identified by a third software application distinguished from the first software application and the second software application. For example, the third software application may be a software application for managing a schedule related to the multiple electronic tickets. However, it is not limited thereto.

For example, referring to FIG. 3, the processor 110 may display the user interface 301 of the first software application as in the state 300. For example, the user interface 301 may include information 302 on the multiple electronic tickets issued based on a reservation made through the first software application. For example, the user interface 301 may further include an executable object 303 for registering the multiple electronic tickets in the second software application. The processor 110 may identify the registration based on user input 304 for the executable object 303. However, it is not limited thereto.

Referring back to FIG. 2B, in operation 213, the processor 110 may execute the second software application.

For example, the second software application may be executed without a user input after the identification. For example, the second software application may be executed in response to the identification. For another example, the second software application may be executed without a user input under conditions that predefined or predetermined conditions are satisfied after the identification. However, it is not limited thereto.

For another example, the second software application may be executed based on a user input identified after the identification. For example, the second software application may be executed based on a user input of an executable object (e.g., an icon of the second software application) indicating the second software application. However, it is not limited thereto.

For still another example, the execution state of the second software application may be switched from a background state to a foreground state. For example, the execution of the second software application may be initiated before executing operation 211, and may be switched to the foreground state in operation 213. For another example, the second software application may be executed in the background state while executing operation 211, and may be executed in the foreground state in operation 213. However, it is not limited thereto.

In operation 215, based on the execution of the second software application, within the user interface of the second software application, the processor 110 may display a visual object including integration information of the multiple electronic tickets and providing the multiple electronic tickets within the user interface, through the display 140. For example, the visual object may be displayed in the user interface for inquiring, calling, or displaying the multiple electronic tickets through the second software application.

For example, the integration information may include first data that is common data of the multiple electronic tickets, and second data summarizing unique data in the remaining electronic tickets among the multiple electronic tickets based on unique data in the first electronic ticket for the first user among the multiple electronic tickets. For example, the unique data in the first electronic ticket may include data on the first user in the first electronic ticket.

For example, referring to FIG. 3, the processor 110 may change the state 300 to the state 310 after identifying the registration based on the user input 304. For example, the processor 110 may execute the second software application in response to the user input 304 and display user interface 311 as in state 310 based on the execution. For another example, after identifying user input 304, the processor 110 may execute the second software application in response to a user input for the executable object displayed on home screen and indicating the second software application, and display the user interface 311 as in the state 310 based on the execution.

For example, in the state 310, the user interface 311 may include a visual object 312.

For example, in the state 310, the visual object 312 may include integration information 313 of the multiple electronic tickets. For example, the integration information 313 may include first data 314 including data on airline name 314-1, data on departure location 314-2, data on departure schedule 314-3, data on arrival location 314-4, data on arrival schedules 314-5, data on flight number 314-6, data on gates 314-7, and/or data on terminal 314-8. For example, the integration information 313 may include second data 315 summarizing the unique data in the remaining electronic tickets (e.g., electronic tickets excluding the first electronic ticket among the multiple electronic tickets) based on the unique data in the first electronic ticket. For example, the processor 110 may identify the first electronic ticket, which is an electronic ticket of the user of the electronic device 100, among the multiple electronic tickets as a reference electronic ticket, and may identify the second data 315 based on identifying the user's name from the first electronic ticket, which is the reference electronic ticket, and identifying the number of remaining electronic tickets. For example, in the second data 315, "Sunhee Kim" may be the unique data in the first electronic ticket, the first user's name, and "and 2 more" may be data summarizing the unique data in the remaining electronic tickets. However, it is not limited thereto.

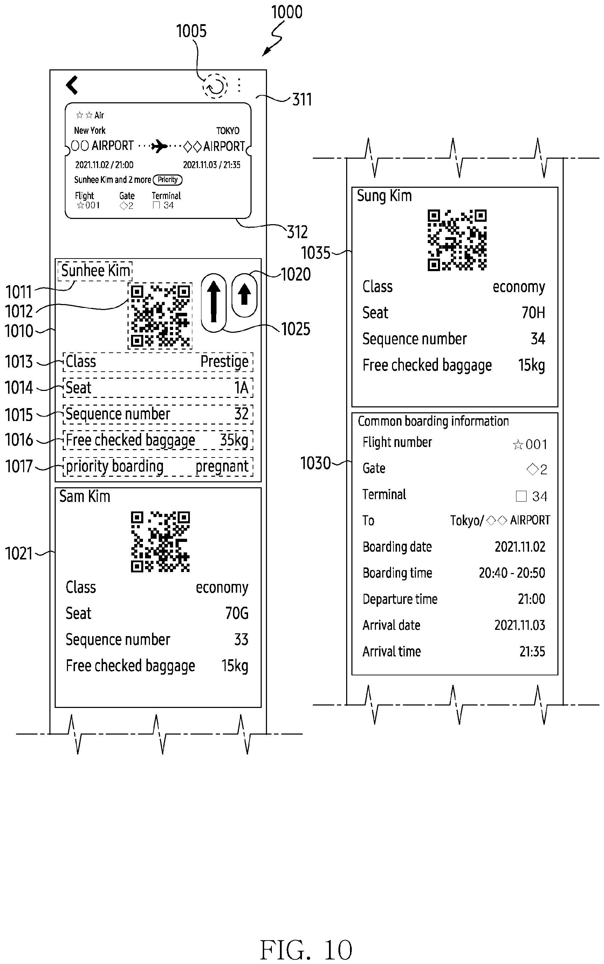

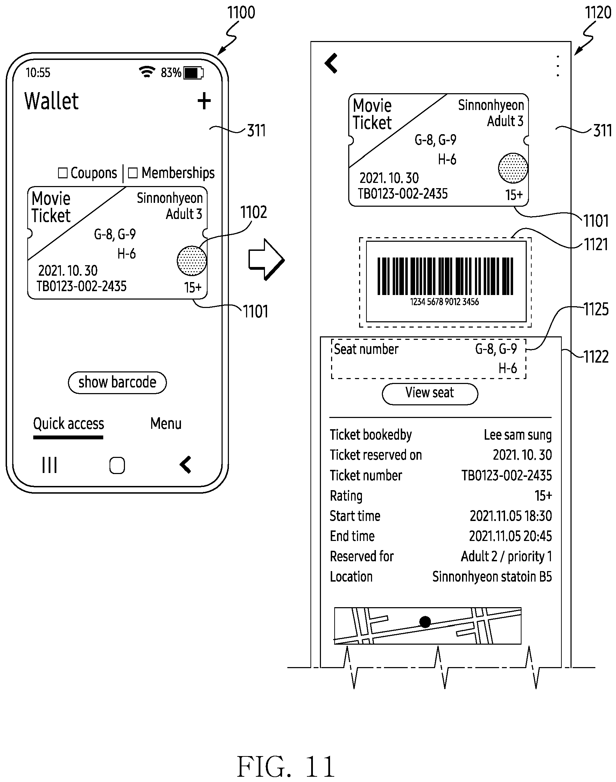

For example, within the state 310, the visual object 312 may be configured to execute a predefined function or a predetermined function within user interface 311 in response to user input to the visual object 312. For example, based on the user input 316 for the visual object 312, the processor 110 may provide information on the multiple electronic tickets within the user interface 311. Information on the multiple electronic tickets provided in the user interface 311 based on the user input 316 will be illustrated through descriptions of FIGS. 10 and 11.

For example, in the state 310, the visual object 312 may be displayed together with executable objects in the user interface 311. For example, the executable objects may include an executable object 320 for providing information on one electronic ticket among the multiple electronic tickets. For example, the executable objects may include an executable object 321 for calling, inquiring, or displaying electronic coupons related to at least portion of the multiple electronic tickets. For example, the executable objects may include an executable object 322 for calling, inquiring, or displaying electronic membership cards related to at least portion of the multiple electronic tickets. However, it is not limited thereto.

For example, within the state 310, the visual object 312 may include visual affordance to indicate that the multiple electronic tickets may be provided rather than a single electronic ticket through the visual object 312, or may have a visual shape or appearance to indicate that the multiple electronic tickets may be provided rather than the single electronic ticket through the visual object 312.

For example, referring to FIG. 4, the visual object 312 may include a visual affordance 401. For example, the visual affordance 401 may include stack elements aggregated in an overlapping arrangement and/or text indicating the number of the multiple electronic tickets. For example, the stack elements aggregated in the overlapping arrangement may be for indicating that the visual object 312 may provide the multiple electronic tickets rather than single electronic ticket. For example, the number of stack elements may be obtained based on the number of multiple electronic tickets.

For example, the visual object 312 may have a predefined or predetermined background color 402. For example, the background color 402 may indicate that the visual object 312 may provide the multiple electronic tickets rather than single electronic ticket.

For example, the visual object 312 may include a visual affordance 403 obtained by integrating unique data of the multiple electronic tickets. For example, the visual affordance 403 may include information on seats allocated to the multiple electronic tickets. For example, the visual affordance 403 may be intended to indicate that the multiple electronic tickets may be provided, rather than a single electronic ticket.

For example, the visual object 312 may be configured with card-shaped stack elements 404 integrated in overlapping arrangement. The first card-shaped stack element 404-1 among the card-shaped stack elements 404 may include the integration information (e.g., integration information 313 shown in FIG. 3). For example, the card-shaped stack elements 404 may indicate that the multiple electronic tickets may be provided, rather than single electronic ticket. For example, the number of card-shaped stack elements 404 may be changed according to the number of multiple electronic tickets. For example, the number of card-shaped stack elements 404 may be obtained based on the number of the multiple electronic tickets.

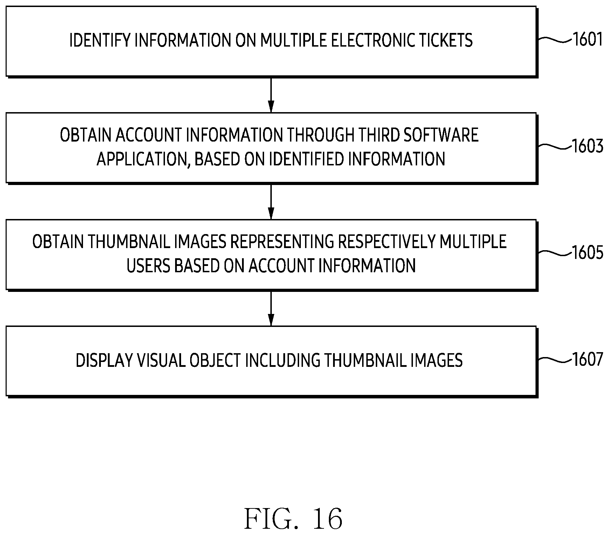

For example, the visual object 312 may include visual affordance 405 including thumbnail images respectively indicating the multiple users of the multiple electronic tickets. For example, the visual affordance 405 may be intended to indicate that the multiple electronic tickets may be provided, rather than single electronic ticket. Meanwhile, a method for obtaining the thumbnail images in the visual affordance 405 will be illustrated through the description of FIGS. 16 to 18B.

As described above, the electronic device 100 may display the visual object within the user interface of the second software application. Since the user of the electronic device 100 may quickly or easily access the multiple electronic tickets through the visual object, the electronic device 100 may provide an enhanced user experience through the second software application. Meanwhile, a user (e.g., an airline official or an immigration manager) who authenticates the multiple users through the multiple electronic tickets may check the right or authority of the multiple users granted through the multiple electronic tickets, through the visual object, without using other electronic devices for which the multiple electronic tickets are registered.

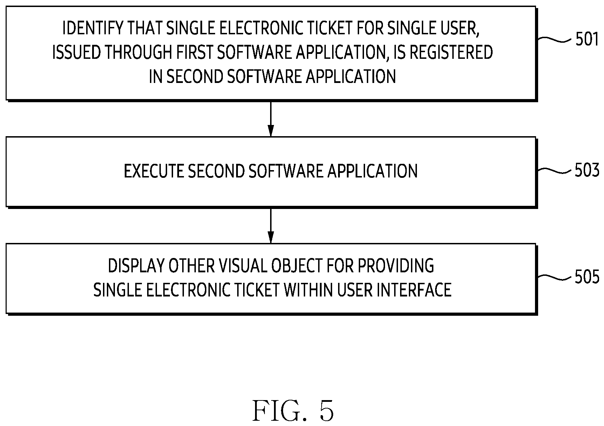

FIG. 5 is a flowchart illustrating a method of displaying another visual object according to an embodiment. This method may be executed by the electronic device 100 illustrated in FIG. 1 or the processor 110 in the electronic device 100.

FIG. 6 illustrates an example of another visual object displayed according to an embodiment.

Referring to FIG. 5, in operation 501, the processor 110 may identify that a single electronic ticket for a single user, issued through the first software application, is registered in the second software application. For example, operation 501 may be defined similarly to operation 211 of FIG. 2B.

In operation 503, the processor 110 may execute the second software application.

For example, the second software application may be executed without a user input after the identification. For example, the second software application may be executed in response to the identification. For another example, the second software application may be executed without a user input under conditions that predefined or predetermined conditions are satisfied after the identification. However, it is not limited thereto.

For another example, the second software application may be executed based on a user input identified after the identification. For example, the second software application may be executed based on a user input for an executable object (e.g., an icon of the second software application) indicating the second software application. However, it is not limited thereto.

In operation 505, the processor 110 may display another visual object for providing the single electronic ticket within the user interface, based on the execution of the second software application, within the user interface of the second software application. For example, the other visual object may be displayed within the user interface for inquiring, calling, or displaying the single electronic ticket through the second software application.

For example, referring to FIG. 6, the processor 110 may display the user interface 311 in the display 140 in the state 600. For example, in state 600, the user interface 311 may include another visual object 612. For example, since the other visual object 612 is displayed to provide the single electronic ticket, the other visual object 612 may be at least partially different from the visual object (e.g., the visual object 312) displayed based on the execution of operation 215 of FIG. 2B. For example, referring further to FIG. 3, unlike the visual object 312, the other visual object 612 may not include second data 315 summarizing unique data in at least one other electronic ticket based on unique data in one electronic ticket.

For example, referring further to FIG. 4, the other visual object 612 may not include the visual affordance 401, unlike the visual object 312. For example, the other visual object 612 may have a background color different from the background color 402 of the visual object 312. For example, the other visual object 612 may not include the visual affordance 403, unlike the visual object 312. For example, the other visual object 612 may be configured with single card shape element, unlike the visual object 312 configured with card-shaped stack elements 404 aggregated in overlapping arrangement. For example, the other visual object 612 may not include the visual affordance 405, unlike the visual object 312. For example, since the other visual object 612 indicate the single electronic ticket, the other visual object 612 may further include seat information 613 more than the visual object 312. However, it is not limited thereto.

Meanwhile, although not shown in FIG. 6, the other visual object 612 may be displayed in the user interface 311 together with the visual object 312. For example, when the second software application is executed after operations 211 and 501 are executed, the processor 110 may display the visual objects 312 and the other visual objects 612 within the user interface 311.

As described above, the electronic device 100 may display the visual object under a condition that the multiple electronic tickets for the multiple users are registered in the second software application and the other visual object under a condition that the single electronic ticket for the single user is registered in the second software application. Since the user may access the multiple electronic tickets through the visual object and access the single electronic ticket through the other visual object, the electronic device 100 may provide a service suitable for the situation by displaying the visual object and the other visual object within the user interface.

Meanwhile, the electronic device 100 may display the visual object visually distinguished from the other visual objects in the user interface so that the user may intuitively distinguish between the access to the multiple electronic tickets and the access to the single electronic ticket.

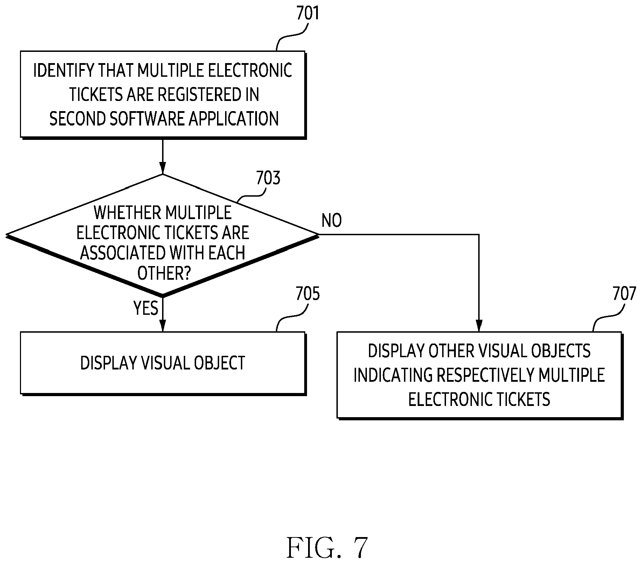

FIG. 7 is a flowchart illustrating a method of identifying whether multiple electronic tickets are associated with each other according to an embodiment. This method may be executed by the electronic device 100 illustrated in FIG. 1 or the processor 110 in the electronic device 100.

Referring to FIG. 7, in operation 701, the processor 110 may identify that the multiple electronic tickets are registered in the second software application. For example, operation 701 may correspond to operation 211 of FIG. 2B.

In operation 703, the processor 110 may identify whether or not the multiple electronic tickets are associated with each other based on the identification. For example, since the multiple electronic tickets associated with each other are likely to be used in the same or similar environment, the processor 110 may execute operation 703. For example, since the multiple electronic tickets associated with each other are likely to be used simultaneously or in a similar time zone, the processor 110 may execute operation 703. In other words, the electronic device 100 may enhance user convenience through execution of operation 703.

In an embodiment, the processor 110 may obtain common data of the multiple electronic tickets and unique data of each of the multiple electronic tickets in response to identifying that the multiple electronic tickets are registered in the second software application. The processor 110 may identify whether or not the multiple electronic tickets are associated with each other based on the common data and the unique data.

In an embodiment, the processor 110 may identify whether or not common data of the multiple electronic tickets exist in response to identifying that the multiple electronic tickets are registered in the second software application, and identify that the multiple electronic tickets are associated with each other based on identifying that the common data exists, and may identify that the multiple electronic tickets are not associated with each other based on identifying that the common data does not exist.

In an embodiment, the processor 110 may identify type of the multiple electronic tickets in response to identifying that the multiple electronic tickets are registered in the second software application, and may identify whether or not the multiple electronic tickets are associated with each other by using different conditions according to the identified type. For example, the processor 110 may identify that the multiple electronic tickets are multiple electronic boarding passes in response to identifying that the multiple electronic tickets are registered in the second software application, and may identify whether or not the multiple electronic boarding passes are associated with each other based on identifying whether or not at least portion of data on the departure location, arrival location, departure time, arrival time, flight name, gate, and terminal within the multiple electronic boarding passes are identical. For example, the processor 110 may identify that the multiple electronic tickets are multiple electronic entering tickets in response to identifying that the multiple electronic tickets are registered in the second software application, and may identify whether or not the multiple electronic tickets are associated with each other based on identifying whether or not data on the start time, location of use, and event name in the multiple electronic tickets are identical. For example, the processor 110 may identify that the multiple electronic tickets are multiple electronic public transportation passes in response to identifying that the multiple electronic tickets are registered in the second software application, and may identify whether or not the multiple electronic public transportation passes are associated with each other based on identifying whether or not the departure area, departure time, identification information of public transportation, and/or arrival area in the multiple electronic transit passes are identical. For example, the processor 110 may identify that the multiple electronic tickets are multiple electronic vaccine passes in response to identifying that the multiple electronic tickets are registered in the second software application, and may identify whether or not the multiple electronic vaccine passes are associated with each other based on identifying whether or not the data on the target disease, vaccination person, and/or treatment history of the target disease in the multiple electronic vaccine passes are identical. However, it is not limited thereto.

Meanwhile, identifying whether or not the data in the multiple electronic tickets are identical may be performed, based on acquisition of information from other electronic devices related to the service provider that issued each of the multiple electronic tickets, analysis of images including the multiple electronic tickets, analysis of the language (e.g., markup language) including the multiple electronic tickets, and/or web search for at least portion of the information included within the multiple electronic tickets. However, it is not limited thereto.

Meanwhile, the processor 110 may execute operation 705 under conditions in which the multiple electronic tickets are associated with each other, and may execute operation 707 under conditions in which the multiple electronic tickets are not associated with each other.

In operation 705, the processor 110 may display the visual object within the user interface based on identifying that the multiple electronic tickets are associated with each other. For example, operation 705 may correspond to operation 215 executed after operation 213 is executed.

In operation 707, the processor 110 may display the other visual objects indicating respectively the multiple electronic tickets within the user interface based on identifying that the multiple electronic tickets are not associated with each other. For example, since the multiple electronic tickets are not associated with each other, the processor 110 may display the other visual objects within the user interface so that each of the multiple electronic tickets is independently inquired. For example, each of the other visual objects may be intended to indicate each of the multiple electronic tickets, and may be similar to the other visual object 612 illustrated in FIG. 6.

FIG. 7 illustrates an example in which all of the multiple electronic tickets are associated with each other, or all of the multiple electronic tickets are not associated with each other, but this is for convenience of explanation. For example, when the processor 110 may identify that the first electronic ticket and the second electronic ticket among multiple electronic tickets are associated with each other, and the third electronic ticket among the multiple electronic tickets are not associated with the first electronic ticket and the second electronic ticket, in operation 703, the processor 110 may display a visual object including the integration information of the first electronic ticket and the second electronic ticket and providing the first electronic ticket and the second electronic ticket within the user interface, in the user interface through the display 140 and another visual object including information on the third electronic ticket among the multiple electronic tickets and providing the third electronic ticket within the user interface, in the user interface through the display 140. However, it is not limited thereto.

As described above, since single visual object (e.g., the visual object) capable of inquiring all of the multiple electronic tickets may be displayed through the second software application when the multiple electronic tickets are associated with each other, and multiple visual objects (e.g., the other visual objects) capable of inquiring respectively the multiple electronic tickets may be displayed through the second software application when the multiple electronic tickets are not associated with each other, the electronic device 100 may enhance user convenience.

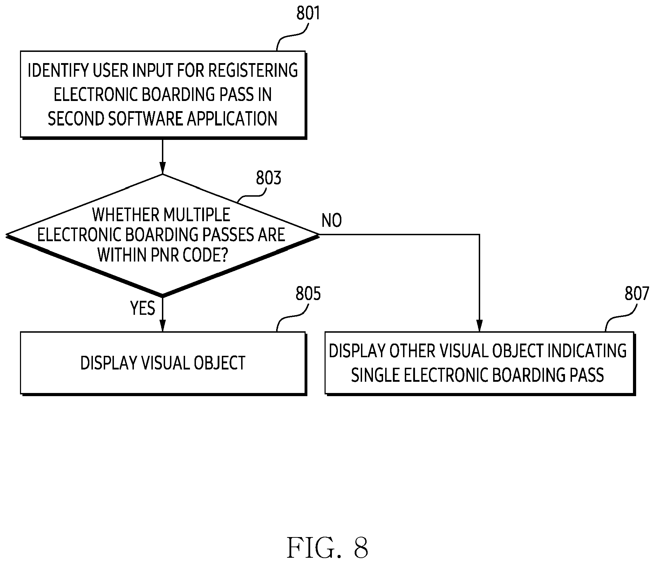

FIG. 8 is a flowchart illustrating a method of identifying whether multiple electronic boarding passes are associated with each other according to an embodiment. This method may be executed by the electronic device 100 illustrated in FIG. 1 or the processor 110 in the electronic device 100.

Referring to FIG. 8, in operation 801, the processor 110 may identify a user input for registering the electronic boarding pass in the second software application. For example, the user input may be received through a user interface of the first software application. For example, the user input may be the user input 304 illustrated in FIG. 3. However, it is not limited thereto. For example, the processor 110 may identify the user input for registering the multiple electronic boarding passes, which are the multiple electronic tickets, in the second software application.

In operation 803, the processor 110 may identify whether the multiple electronic boarding passes are within a passenger name record(PNR) code (or PNR number, or PNR ID) or belong to the PNR code in response to the user input. For example, the PNR code is a code for specifying or identifying reservations related to the multiple electronic boarding passes, and may mean a record in a database of computer reservation system (CRS). For example, the PNR code may include identification information (e.g., names of at least portion of the multiple users, phone numbers, and the like) of at least portion of the multiple users of the multiple electronic boarding passes and/or flight journey information of the multiple electronic boarding passes.

In an embodiment, the processor 110 may obtain the PNR code using the first software application while issuing at least portion of the multiple electronic boarding passes through the first software application, and identify whether or not the multiple electronic boarding passes are present in the obtained PNR code or belong to the obtained PNR code.

In an embodiment, based on operation 801, the processor 110 may request the PNR code to the electronic device of the service provider that issued the multiple electronic boarding passes, receive the PNR code from the electronic device of the service provider, and identify whether or not the multiple electronic boarding passes are in or belong to the received PNR code.

The processor 110 may execute operation 805 under the condition that the multiple electronic boarding passes are present in or belong to the PNR code, and may execute operation 807 under the condition that single electronic boarding pass is present in or belongs to the PNR code.

In operation 805, the processor 110 may display the visual object within the user interface based on identifying that the multiple electronic boarding passes are present in or belong to the PNR code. For example, operation 805 may correspond to operation 215 illustrated in FIG. 2B.

In operation 807, the processor 110 may display the other visual object indicating the single electronic boarding pass within the user interface, based on identifying that the single electronic boarding pass is present within or belongs to the PNR code. For example, operation 807 may correspond to operation 505 illustrated in FIG. 5.

FIG. 8 illustrates a method of identifying whether or not the multiple electronic tickets are associated with each other through the PNR code when the multiple electronic tickets are the multiple electronic boarding passes, but the methods illustrated in FIG. 8 and descriptions thereof are applicable to other types of electronic tickets. For example, the processor 110 may obtain movie reservation information based on a user input requesting registration of an electronic movie ticket when the user reserves a movie using the electronic device 100, identify whether or not multiple electronic movie tickets are present in or belong to the movie reservation information, and display the visual obj ect under a condition that the multiple electronic movie tickets are present in or belong to the movie reservation information, and display the other visual object otherwise.

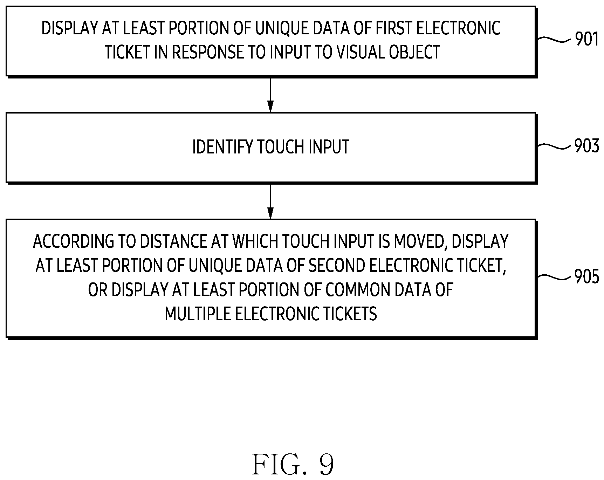

FIG. 9 is a flowchart illustrating a method of displaying data in response to an input to a visual object, according to an embodiment. This method may be executed by the electronic device 100 illustrated in FIG. 1 or the processor 110 in the electronic device 100.

FIGS. 10 and 11 illustrate examples of data displayed in response to an input to a visual object according to an embodiment.

Referring to FIG. 9, in operation 901, the processor 110 may display at least portion of unique data of the first electronic ticket among the multiple electronic tickets in response to an input to the visual object. For example, referring to FIGS. 3 and 10, in the state 310, the processor 110 may receive the user input 316. The processor 110 may change the state 310 to the state 1000 in response to the user input 316. For example, in state the 1000, the processor 110 may display at least a portion of the unique data 1010 of the first electronic ticket in the user interface 311. For example, at least a portion of the unique data 1010 of the first electronic ticket may be data for only the first electronic ticket among the multiple electronic tickets. For example, at least a portion of unique data 1010 of the first electronic ticket may include information 1011 on the first user's name of the first electronic ticket, a QR code 1012 used to recognize information on the first electronic ticket, information 1013 on the seat class of the first electronic ticket, a seat location information 1014 of the first electronic ticket, a sequence number 1015 of the first electronic ticket, information 1016 on the amount of baggage allowed free of charge for the seat of the first electronic ticket, and/or priority boarding information 1017 of the first user.

For example, at least the portion of the unique data 1010 of the first electronic ticket may be displayed together with the visual object 312 within the user interface 311. However, it is not limited thereto. For example, the processor 110 may display, among the visual object 312 and at least a portion of the unique data 1010 of the first electronic ticket, only at least the portion of the unique data 1010 of the first electronic ticket, within the user interface 311 in the state 1000.

Meanwhile, in the state 1000, the processor 110 may further include an executable object 1005 used to identify whether or not each state of the multiple electronic tickets is changed in the user interface 311. However, it is not limited thereto.

Referring back to FIG. 9, in operation 903, the processor 110 may identify a touch input in contact with the display 140 displaying at least a portion of the unique data of the first electronic ticket. For example, the touch input may be a first sweeping input that is released after the touch input in contact with the display 140 is moved by a first distance in the first direction, or a second sweeping input that is moved by a second distance longer than the first distance, or a second sweeping input that is released after the touch input is moved in the first direction by a second distance longer than the first distance. For example, the touch input may be an input that scrolls data (or information) in the user interface by the first distance or the second distance. For example, the touch input may be an input defined to display other data distinct from the unique data of the first electronic ticket within the user interface. However, it is not limited thereto.

In operation 905, the processor 110 may display at least a portion of the unique data of the second electronic ticket among the multiple electronic tickets according to the distance at which the touch input is moved, within the user interface, or display at least a portion of common data of the multiple electronic tickets within the user interface.

For example, referring to FIG. 10, the processor 110 may receive the first sweeping input 1020 in the state 1000. The processor 110 may display at least a portion of the unique data 1021 of the second electronic ticket in response to the first sweeping input 1020 in user interface 311. For example, the at least portion of the unique data 1021 of the second electronic ticket may be data for only the second electronic ticket among the multiple electronic tickets. For example, the processor 110 may cease displaying at least a portion of the unique data 1010 of the first electronic ticket in the user interface 311, based on moving at least a portion of the unique data 1010 of the first electronic ticket in response to the first sweeping input 1020, and display at least a portion of the unique data 1021 of the second electronic ticket in the user interface 311. For example, at least a portion of the unique data 1021 of the second electronic ticket may be displayed after the scroll animation which is displayed while the first sweeping input 1020 is maintained, is completed. However, it is not limited thereto.

As another example, the processor 110 may receive the second sweeping input 1025 in the state 1000. The processor 110 may display at least a portion of the common data 1030 of the multiple electronic tickets in response to the second sweeping input 1025 in the user interface 311. For example, the processor 110 may cease displaying at least a portion of the unique data 1010 of the first electronic ticket in the user interface 311, based on moving at least a portion of the unique data 1010 of the first electronic ticket in response to the second sweeping input 1025, and display at least a portion of the common data 1030 of the multiple electronic tickets in the user interface 311. For example, at least a portion of the common data 1030 may be displayed after the scroll animation which is displayed while the second sweeping input 1025 is maintained, is completed. However, it is not limited thereto.

Meanwhile, in an embodiment, the visual object 312 may be maintained within the user interface 311 independently of the first sweeping input 1020 and the second sweeping input 1025. For example, the visual object 312 may be pinned, unlike at least a portion of the unique data 1010 of the first electronic ticket that is scrolled in response to the first sweeping input 1020 or the second sweeping input 1025. However, it is not limited thereto. For example, the visual object 312 may be scrolled together with at least a portion of the unique data 1010 of the first electronic ticket in response to the first sweeping input 1020 or the second sweeping input 1025.

Meanwhile, although not shown in FIG. 10, the processor 110 may receive a third sweeping input that is released after the touch input in contact with the display 140 is moved by a third distance, which is longer than the first distance and shorter than the second distance in the first direction. The processor 110 may display at least a portion of the unique data 1035 of the third electronic tickets among the multiple electronic tickets in response to the third sweeping input.

Meanwhile, when each of the multiple electronic tickets is an electronic ticket that is checked in without user identification information, the processor 110 may provide a state distinguished from the state 1000 of FIG. 10. For example, referring to FIG. 11, in state 1100, the processor 110 may display a visual object 1101 for providing multiple electronic tickets for which use is authorized without identification information of multiple users within user interface 311. For example, the processor 110 may change the state 1100 to the state 1120 in response to an input 1102 for the visual object 1101. For example, in state 1120, the processor 110 may display unique data 1121 of the first electronic entering ticket among the multiple electronic entering tickets. For example, since each of the multiple electronic entering tickets is an electronic entering ticket that is authorized to be used without user authentication, the unique data 1121 of the first electronic ticket may include only a barcode.

For example, since the unique data 1121 of the first electronic entering ticket includes information reduced from the unique data 1010 of the first electronic ticket, the processor 110 may display at least a portion of the common data 1122 of the multiple electronic entering tickets as well as the unique data 1121 of the first electronic entering ticket in state 1120. For example, since each of the multiple electronic entering tickets is an electronic entering ticket that is authorized for use without user authentication, the common data 1122 may further include seat information 1125 of the multiple electronic entering tickets, unlike the common data 1030 of the multiple electronic tickets illustrated in FIG. 10. However, it is not limited thereto.

For example, since the unique data 1121 of the first electronic entering ticket includes less information than the unique data 1010 of the first electronic ticket, the touch input for inquiring the unique data of the second electronic entering ticket among the multiple electronic entering tickets may be different from the touch input for inquiring the unique data 1021 of the second electronic ticket among the multiple electronic tickets shown in FIG. 10. For example, in response to the sweeping input that is released after the touch input in contact with the display 140 displaying the unique data 1121 of the first electronic entering ticket is moved in a second direction different from the first direction, the processor 110 may cease displaying the unique data 1121 of the first electronic entering ticket in the user interface 311, and display the unique data of the second electronic entering ticket, which is different from the unique data 1021 of the second electronic entering ticket, in the user interface 311. For example, the second direction may be perpendicular to the first direction. However, it is not limited thereto.

As described above, the electronic device 100 may provide data on the multiple electronic tickets displayed in response to an input to the visual object in an efficient arrangement. For example, the electronic device 100 may display a portion of the data in response to an input to the visual object. For example, the electronic device 100 may display unique data of the first electronic ticket for the use of the first electronic ticket among the multiple electronic tickets, as portion of the data. Since the data is arranged so that the unique data of the second electronic ticket among the multiple electronic tickets appears before the common data of the multiple electronic tickets based on a scroll input received while the unique data of the first electronic ticket is displayed, the electronic device 100 may enhance the convenience of using the multiple electronic tickets through the visual object.

Meanwhile, since the touch input for calling unique data for each of the multiple electronic tickets is defined differently based on the size for displaying the unique data of each of the multiple electronic tickets, the electronic device 100 may enhance the convenience of using the multiple electronic tickets through the visual object.

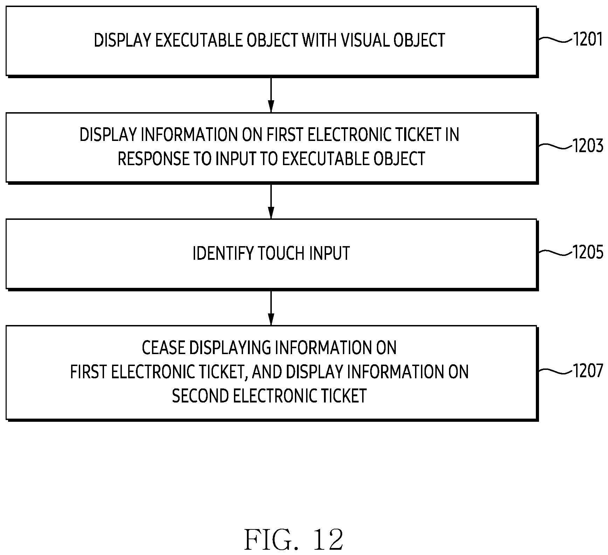

FIG. 12 is a flowchart illustrating a method of displaying data in response to an input to an executable object displayed together with a visual object, according to an embodiment. This method may be executed by the electronic device 100 illustrated in FIG. 1 or the processor 110 in the electronic device 100.

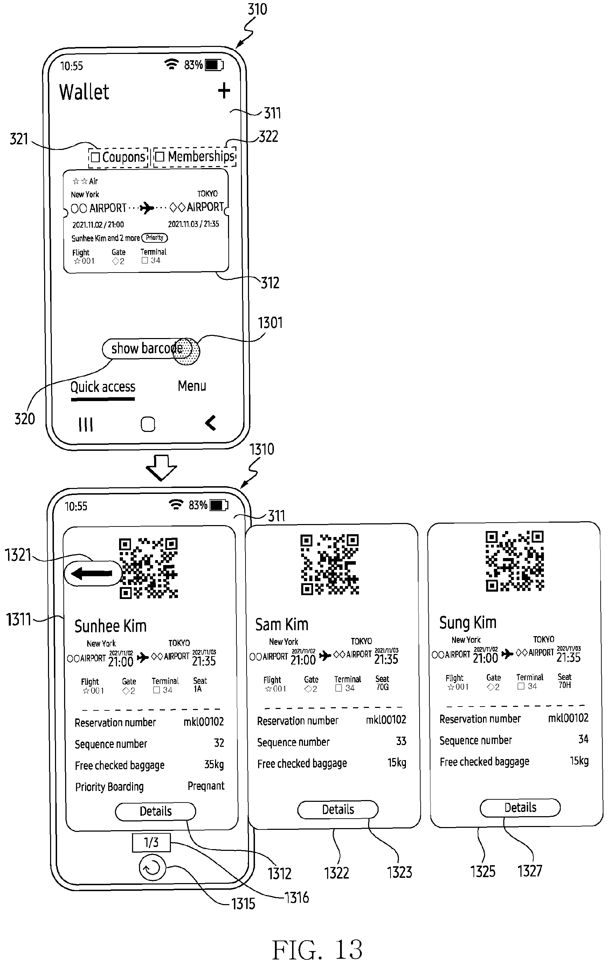

FIG. 13 illustrates an example of data displayed in response to an input to an executable object displayed together with a visual object, according to an embodiment.

Referring to FIG. 12, in operation 1201, the processor 110 may display an object executable with the visual object within the user interface. For example, the executable object may be used to execute a function of calling or displaying a first electronic ticket among the multiple electronic tickets. For example, the executable object may be the executable object 320 illustrated in FIG. 3.

In operation 1203, the processor 110 may display information on the first electronic ticket through the display 140 within the user interface in response to an input to the executable object. For example, the processor 110 may cease displaying the visual object within the user interface and display the information, in response to the input to the executable object. For example, referring to FIG. 13, the processor 110 may receive an input 1301 for the executable object 320 displayed with the visual object 312 within the user interface 311, within the state 310. The processor 110 may change the state 310 to the state 1310 in response to the input 1301. For example, in the state 1310, the processor 110 may cease displaying visual objects 312 within the user interface 311 and display information 1311 on the first electronic ticket within the user interface 311. For example, the information 1311 may include data required for check-in through the first electronic ticket. For example, the information 1311 may be displayed within the user interface 311 together with the executable object 1312 for displaying detailed information on the first electronic ticket. For example, the executable object 1312 may overlap the information 1311. However, it is not limited thereto. For example, the information 1311 may be displayed within the user interface 311 together with the executable object 1315 for identifying whether the state of the first electronic ticket is changed. However, it is not limited thereto. For example, the information 1311 may be displayed together with page indicators 1316 indicating that the information 1311 is related to the first electronic ticket among the multiple electronic tickets. However, it is not limited thereto.

Referring back to FIG. 12, in operation 1205, the processor 110 may identify a touch input in contact with the display 140 displaying the information on the first electronic ticket. For example, the touch input may be a third sweeping input that is released after the touch input in contact with the display 140 is moved in the second direction which is explained in the disclosure of FIG. 10. For example, the touch input may be an input that scrolls information (e.g., the information being displaced) in the user interface by a distance greater than or equal to a reference distance. For example, the touch input may be an input defined for displaying in the user interface other information distinguished from the information being displaced. However, it is not limited thereto.

In operation 1207, the processor 110 may cease displaying the information on the first electronic ticket in response to the touch input (e.g., the third sweeping input), and may display the information on the second electronic ticket among the multiple electronic tickets through the display 140. For example, referring to FIG. 13, the processor 110 may receive the third sweeping input 1321 in the state 1310. In response to the third sweeping input 1321, the processor 110 may cease displaying the information 1311 on the first electronic ticket and display the information 1322 on the second electronic ticket. For example, the information 1322 may include data required for check-in through the second electronic ticket. For example, the information 1322 may be displayed within the user interface 311 together with an executable object 1323 for displaying detailed information on the second electronic ticket. For example, the executable object 1323 may overlap the information 1322. However, it is not limited thereto. Although not shown in FIG. 13, the information 1322 may be displayed in user interface 311 together with the executable object 1315 for identifying whether the state of the second electronic ticket is changed. However, it is not limited thereto. For example, the information 1322 may be displayed together with page indicators 1316 indicating that the information 1322 is related to the second electronic ticket among the multiple electronic tickets. The state of the page indicators 1316 displayed with the information 1322 may be different from the state of the page indicators 1316 displayed with the information 1311. However, it is not limited thereto.

Although not shown in FIG. 13, in response to a sweeping input that is released after a touch input in contact with to the display 140 displaying the information 1322 is moved in the second direction, the processor 110 may cease displaying the information 1322 in the user interface 311, and display the information 1325 on the third electronic ticket among the multiple electronic tickets in the user interface 311 through the display 140. For example, the information 1325 may include data required for check-in through the third electronic ticket. For example, in the user interface 311, the information 1325 may be displayed together with the executable object 1327 for displaying detailed information on the third electronic ticket. For example, the executable object 1327 may overlap the information 1325. However, it is not limited thereto. Although not shown in FIG. 13, the information 1325 may be displayed in user interface 311 together with the executable object 1315 for identifying whether or not the state of the third electronic ticket is changed. However, it is not limited thereto. For example, the information 1325 may be displayed together with page indicators 1316 indicating that the information 1325 is related to the third electronic ticket among the multiple electronic tickets. The state of the page indicators 1316 displayed with the information 1325 may be different from the state of the page indicators 1316 displayed with the information 1311, and the state of the page indicators 1316 displayed with the information 1322. However, it is not limited thereto.

As described above, the electronic device 100 may display an executable object for displaying information on one electronic ticket (e.g., the first electronic ticket) among multiple electronic tickets that may be inquired through the visual object, together with the visual object in the user interface. The electronic device 100 may provide an enhanced user experience by defining differently the displayed information based on the input to the visual object and the displayed information executed based on the input to the executable object.

Meanwhile, the electronic device 100 may provide data displayed in response to an input to the executable object displayed together with the visual object in an efficient arrangement. For example, the electronic device 100 may display information on the first electronic ticket among the multiple electronic tickets in response to an input to the executable object, as portion of the data. The electronic device 100 may enhance the convenience of using the multiple electronic tickets by arranging the data so that unique data of the second electronic ticket among the multiple electronic tickets may be displayed based on a scroll input received while the information on the first electronic ticket is displayed.

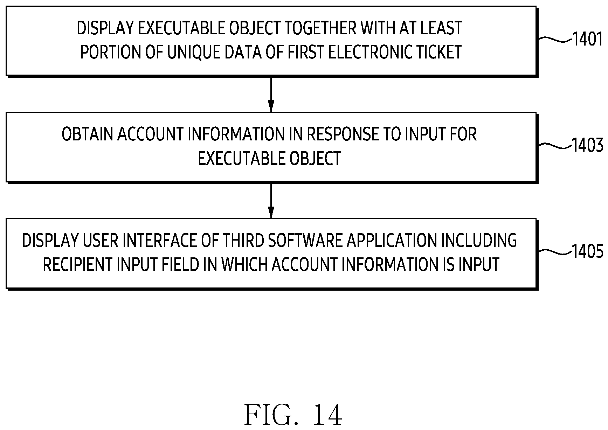

FIG. 14 is a flowchart illustrating a method of transmitting information on multiple electronic tickets registered in a second software application to a plurality of other electronic devices, according to an embodiment. This method may be executed by the electronic device 100 illustrated in FIG. 1 or the processor 110 in the electronic device 100.

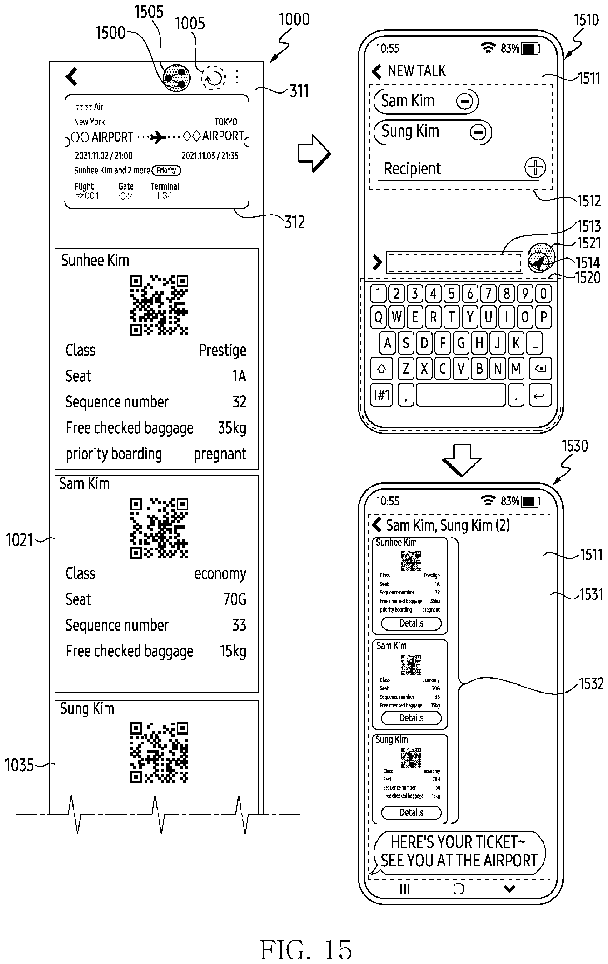

FIG. 15 illustrates an example of a user interface of a third software application displayed according to an embodiment.

Referring to FIG. 14, in operation 1401, the processor 110 may display an executable object for transmitting information on the multiple electronic tickets to plurality of other electronic devices within the user interface of the second software application through the display 140, together with at least a portion of the unique data of the first electronic ticket. For example, the executable object may be an object provided in the second software application. For example, the executable object may be an object provided within or by the operating system of the electronic device 100. However, it is not limited thereto.

For example, referring to FIG. 15, in the state 1000, the processor 110 may display an executable object 1500 for transmitting information on the multiple electronic tickets to the plurality of other electronic devices together with an executable object 1005 within the user interface 311.

Referring back to FIG. 14, in operation 1403, the processor 110 may obtain account information of the remaining users except a user of the electronic device 100 among the multiple users, in response to an input of the executable object for transmitting the information to the plurality of other electronic devices. For example, the processor 110 may execute a software application for managing contacts stored in the electronic device 100 in response to the input, in the background state. The processor 110 may obtain the account information by comparing the first information in the contact managed by the software application executed in the background state with the user information included in the remaining electronic tickets, among the multiple electronic tickets, except for the electronic ticket for the user of the electronic device 100. For example, the processor 110 may obtain the account information based on identifying the account information in the first information corresponding to the user information included in the remaining electronic tickets. However, it is not limited thereto.

In operation 1405, the processor 110 may display a user interface of a third software application including a recipient input field in which the account information is input. For example, the third software application may be a software application identified for transmitting the information on the multiple electronic tickets. For example, the third software application may be a software application for providing a message transmission/reception service or providing an email service. For example, the third software application may be executed in response to the input.

For example, referring to FIG. 15, the processor 110 may receive an input 1505 for the executable object 1500 in the state 1000. The processor 110 may change the state 1000 to the state 1510 in response to the input 1505. For example, in the state 1510, the processor 110 may display the user interface 1511. For example, in the state 1510, the user interface 1511 may include a recipient input field 1512 in which the account information is input.

For example, in the state 1510, the user interface 1511 may further include a message input field 1513. However, it is not limited thereto.

For example, in the state 1510, the user interface 1511 may be displayed together with a virtual keyboard 1520. For example, the virtual keyboard 1520 may partially overlap the user interface 1511. For example, the virtual keyboard 1520 may be displayed in response to a touch input for the message input field 1513. For example, the processor 110 may display text corresponding to a touch input to the virtual keyboard 1520 in the message input field 1513. However, it is not limited thereto.

For example, in state 1510, the user interface 1511 may further include an executable object 1514 for transmitting a message written through the user interface 1511. The processor 110 may receive an input 1521 for the executable object 1514 in the state 1510. The processor 110 may change the state 1510 to the state 1530 in response to the input 1521. For example, in the state 1530, the processor 110 may display information 1531 on the transmission result of the message written through the user interface 1511, within the user interface 1511. For example, in the state 1530, the information 1531 may include information 1532 on the multiple tickets.

As described above, the electronic device 100 may obtain the account information by inputting user information extracted from the information on the multiple electronic tickets into a software application for managing a contact, and enhance convenience of sharing information on the multiple electronic tickets by displaying the user interface of the third software application, which includes a recipient input field in which the account information is inserted.

FIG. 16 is a flowchart illustrating a method of displaying a visual object including thumbnail images, according to an embodiment. This method may be executed by the electronic device 100 illustrated in FIG. 1 or the processor 110 in the electronic device 100.

Referring to FIG. 16, in operation 1601, the processor 110 may identify information on the multiple electronic tickets. For example, the processor 110 may identify information on the multiple electronic tickets based on executing operation 211 of FIG. 2B. For example, the identification may be executed through the second software application. However, it is not limited thereto.

In operation 1603, the processor 110 may obtain account information for the multiple users through a third software application stored in the electronic device 100, based on the identified information. For example, the third software application may be a software application for managing the contact stored in the electronic device 100. For example, based on executing operation 1601 or executing operation 211, the processor 110 may execute the third software application in the background state and obtain the account information through the third software application executed in the background state. For example, the account information may include data on images including graphic objects respectively corresponding to the multiple users. For example, at least portion of the images may be obtained based on photographing at least portion of the multiple users through a camera. For example, at least portion of the images may include emoji graphic objects obtained through user manipulation and/or emoji graphic objects obtained based on images obtained through the camera. However, it is not limited thereto.

In operation 1605, the processor 110 may obtain thumbnail images respectively representing the multiple users based on the account information. For example, the processor 110 may obtain the reduced images as the thumbnail images based on the data in the account information. For another example, the processor 110 may obtain the thumbnail images by cropping a portion of each of the images based on the data in the account information. However, it is not limited thereto.

In operation 1607, the processor 110 may display the visual object including the thumbnail images within the user interface of the second software application. For example, the visual object may be a visual object 312 including visual affordance 405, illustrated in FIG. 4. However, it is not limited thereto.

As described above, the electronic device 100 may include the thumbnail images in the visual object based on interworking with a software application for managing a contact. Since the thumbnail images respectively represent the multiple users, the electronic device 100 may provide an enhanced user experience by intuitively displaying information on users of the multiple electronic tickets that may be displayed through the visual object.

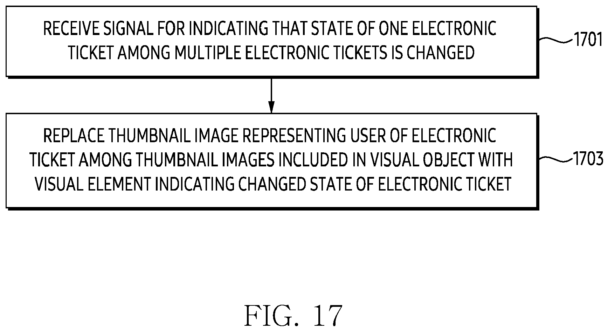

FIG. 17 is a flowchart illustrating a method of displaying a visual object including a visual element indicating a change in a state of at least portion of multiple electronic tickets, according to an embodiment. This method may be executed by the electronic device 100 illustrated in FIG. 1 or the processor 110 in the electronic device 100.

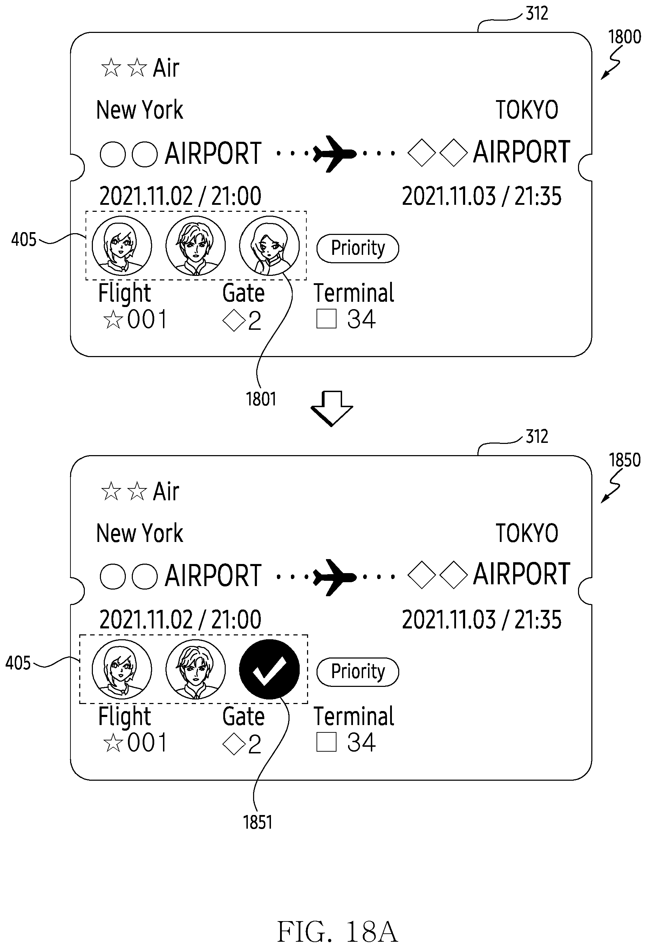

FIG. 18A illustrates an example of a visual object including a visual element indicating a change in a state of at least portion of multiple electronic tickets displayed according to an embodiment.

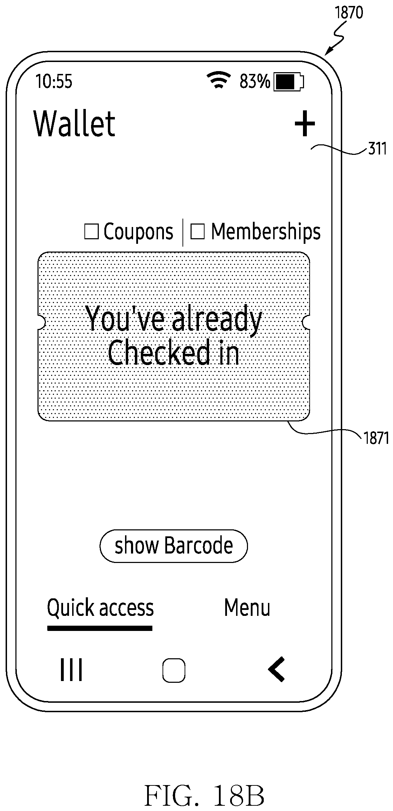

FIG. 18B illustrates an example of another visual object having a changed state displayed in another electronic device, according to an embodiment.

Referring to FIG. 17, in operation 1701, the processor 110 may receive a signal for indicating that the state of an electronic ticket of one of the multiple electronic tickets is changed, from the external electronic device through the communication circuit 160. For example, operation 1701 may be executed after operation 211 of FIG. 2B is executed. For example, operation 1701 may be executed after operation 1605 of FIG. 16 is executed. For example, operation 1701 may be executed after operation 1607 of FIG. 16 is executed.

In an embodiment, the external electronic device may be an electronic device (e.g., a server) related to a service provider (e.g., an airline) that issued the multiple electronic tickets. For example, the external electronic device may identify that the user of the electronic ticket among the multiple electronic tickets is checked in, and transmit the signal to the electronic device 100, which is an electronic device of a user of another electronic ticket issued with the electronic ticket which is checked in or related to the electronic ticket based on the identification. However, it is not limited thereto.

In an embodiment, the external electronic device may be an electronic device (e.g., a server) related to a service provider providing a service through the second software application. For example, the external electronic device may receive information indicating that the check-in is performed from other external electronic devices related to the service provider issuing the multiple electronic tickets, and transmit the signal to the electronic device 100, which is electronic device of the user of the other electronic ticket issued with the electronic ticket which is checked in or related to the electronic ticket, based on the received information.

In an embodiment, the external electronic device may be an electronic device of a user of the electronic ticket. For example, the external electronic device may identify that the check-in is performed, and transmit, based on the identification, the signal to the electronic device 100, which is an electronic device adjacent to the external electronic device and is an electronic device of the user of the other electronic ticket issued with the electronic ticket which is checked in or related to the electronic ticket. However, it is not limited thereto.

In operation 1703, based on the signal, the processor 110 may replace the thumbnail image representing the user of the electronic ticket among the thumbnail images included in the visual object with a visual element indicating the changed state of the electronic ticket. For example, the visual element may be for indicating that the check-in through the electronic ticket is completed. For example, referring to FIG. 18A, as in the state 1800, the processor 110 may display the user interface (e.g., user interface 311) of the second software application that includes a visual object 312 including visual affordance 405 including the thumbnail images. The processor 110 may change the state 1800 to the state 1850, based on the signal. For example, in the state 1850, the processor 110 may replace the thumbnail image 1801 representing the user of the electronic ticket whose state has changed, among the thumbnail images in the visual affordance 405 in the visual object 312, with a visual element 1851. For example, in the state 1850, the processor 110 may cease displaying the thumbnail images 1801 within the visual object 312, and display the visual element 1851 within the visual object 312.

Meanwhile, the electronic device of the user of the electronic ticket may replace the visual object representing the electronic ticket with another visual object to indicate the changed state. For example, referring to FIG. 18B, in the state 1870, the electronic device may display another visual object 1871 in the user interface 311. For example, the other visual object 1871 may include text indicating that the check-in through the electronic ticket is completed. However, it is not limited thereto.

As described above, the electronic device 100 may intuitively provide information on the state of the multiple electronic tickets by changing the state of the information (or visual affordance) in the visual object for displaying the multiple electronic tickets based on a change in the state of at least portion of the multiple electronic tickets.

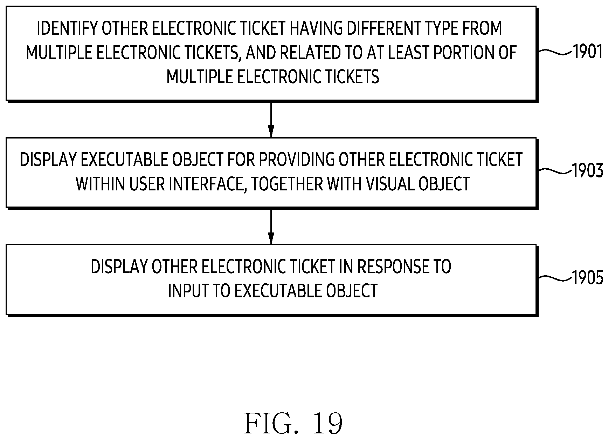

FIG. 19 is a flowchart illustrating a method of displaying an executable object with a visual object to provide another electronic ticket related to at least portion of multiple electronic tickets, according to an embodiment. This method may be executed by the electronic device 100 illustrated in FIG. 1 or the processor 110 in the electronic device 100.

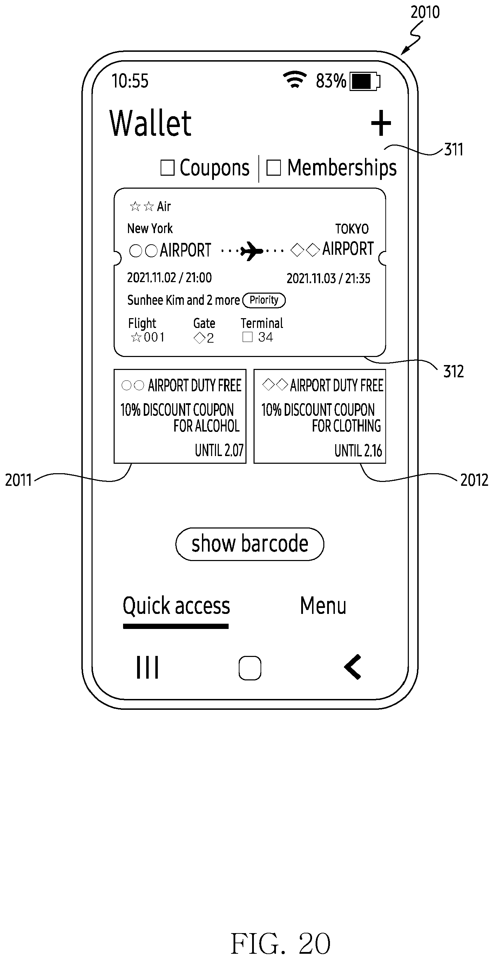

FIG. 20 illustrates an example of another visual object displayed together with a visual object, according to an embodiment.

Referring to FIG. 19, in operation 1901, the processor 110 may identify other electronic tickets having a different type from the multiple electronic tickets, and related to at least portion of the multiple electronic tickets. For example, the other electronic ticket may have another right or authority distinguished from the right or authority of each of the multiple electronic tickets. For example, the other electronic ticket may be electronic tickets having the other right or authority available to at least some users of the multiple electronic tickets. However, it is not limited thereto.

For example, the processor 110 may identify the other electronic ticket based on the information on the multiple electronic tickets. For example, the processor 110 may identify a location related to at least portion of the multiple electronic tickets based on information on the multiple electronic tickets, and identify the other electronic ticket based on the identified location. For example, the processor 110 may identify date data related to at least part of the multiple electronic tickets based on information on the multiple electronic tickets, and identify the other electronic ticket based on the identified date data. However, it is not limited thereto.

In operation 1903, the processor 110 may display an executable object for providing the other electronic ticket in the user interface of the second software application together with the visual object. For example, the appearance of the executable object may correspond to reduced other electronic ticket.

For example, referring to FIG. 20, in the state 2010, the processor 110 may display an executable object 2011 and/or an executable object 2012 for providing the other electronic ticket within the user interface 311 together with the visual object 312. For example, the executable object 2011 may be an object for displaying the other electronic ticket (e.g., duty-free liquor discount ticket) identified based on an identification that the user of the at least portion of the multiple electronic tickets is an adult, which may be displayed in the user interface 311 through the visual object 312, an identification that the multiple electronic tickets are multiple electronic boarding passes, and an identification that the flight journey of the multiple electronic boarding passes is included within a period in which the other electronic ticket are available, within the user interface 311. For example, the executable object 2012 may be an object for displaying the other electronic ticket (e.g., duty-free clothing discount ticket) identified based on an identification that the multiple electronic tickets are the multiple electronic boarding passes and an identification that the flight journey of the multiple electronic boarding passes is included within a period in which the other electronic ticket are available, within the user interface 311. For example, each of the executable object 2011 and the executable object 2012 may be a reduced image of the other electronic ticket. However, it is not limited thereto.

Referring back to FIG. 19, in operation 1905, the processor 110 may display the other electronic ticket within the user interface in response to an input to the executable object. For example, although not shown in FIG. 20, the processor 110 may display the other electronic ticket within the user interface 311 in response to an input to the executable obj ect 2011 or the executable object 2012.

As described above, the electronic device 100 may display the executable object together with the visual object within the user interface. Since the executable object is an object related to at least portion of the multiple electronic tickets capable of displaying within the user interface through the visual object, and an object for displaying the other electronic ticket having the other right or authority distinct from the right or authority of the multiple electronic tickets within the user interface, the electronic device 100 may provide an enhanced service related to the multiple electronic tickets. In addition, the electronic device 100 may configure the executable object with the appearance corresponding to the other electronic ticket reduced so that the user may intuitively recognize the service related to the other electronic ticket.

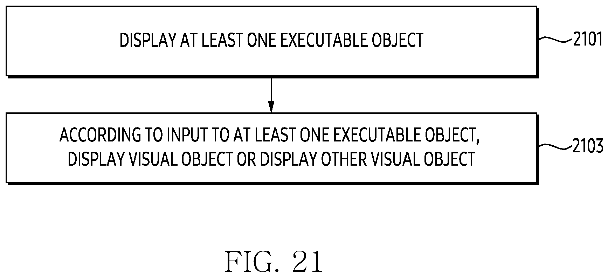

FIG. 21 is a flowchart illustrating a method of adaptively displaying a visual object or displaying another visual object, according to an embodiment. This method may be executed by the electronic device 100 illustrated in FIG. 1 or the processor 110 in the electronic device 100.

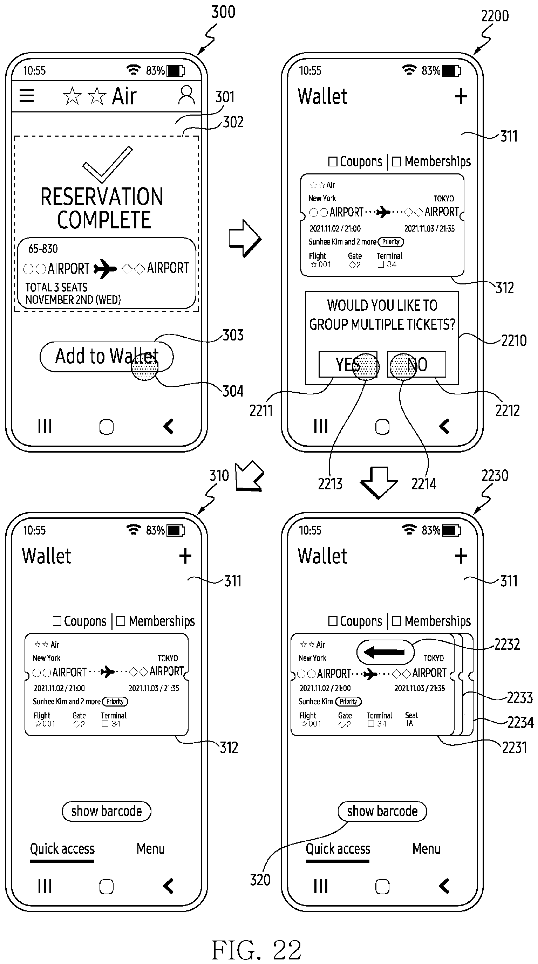

FIG. 22 illustrates an example of a visual object and another visual object adaptively displayed according to an embodiment.

Referring to FIG. 21, in operation 2101, in response to execution of the second software application, the processor 110 may display at least one executable object for inquiring how to provide the multiple electronic tickets within the user interface of the second software application, within the user interface through display 140. For example, the processor 110 may display at least one executable object based on the above identification in operation 211 in response to executing the second software application as in operation 213. For example, referring to FIG. 22, the processor 110 may receive a user input 304 in the state 300. The processor 110 may change the state 300 to the state 2200 in response to the user input 304. For example, in the state 2200, the processor 110 may display at least one executable object 2210 together with the visual object 312 within the user interface 311. For example, the executable object 2210 may include an executable element 2211 indicating grouping the multiple electronic tickets and the executable element 2212 indicating no grouping the multiple electronic tickets.

Referring back to FIG. 21, in operation 2103, the processor 110 may display the visual object within the user interface according to an input for the at least one executable object, and display other visual object for displaying an electronic ticket (e.g., a first electronic ticket) among the multiple electronic tickets within the user interface. For example, referring to FIG. 22, the processor 110 may receive an input 2213 for the executable element 2211 in the state 2200. The processor 110 may change the state 2200 to the state 310 in response to the input 2213. For example, in the state 310, the processor 110 may display the visual object 312 within the user interface 311. As another example, the processor 110 may receive an input 2214 for the executable element 2212 in the state 2200. The processor 110 may change the state 2200 to the state 2230 in response to the input 2214. For example, in the state 2230, the processor 110 may display visual object 2231, which is the other visual object, in the user interface 311. For example, the visual object 2231 may be an object for displaying a first electronic ticket among the multiple electronic tickets in the user interface 311. For example, the visual object 2231 may include information on the first electronic ticket among the multiple electronic tickets, unlike the visual object 312 including integration information of the multiple electronic tickets.

In an embodiment, in the state 2230, the processor 110 may receive a sweeping input 2232, which is released after the touch input in contact with display 140 displaying visual object 2231 is moved. Although not illustrated in FIG. 22, the processor 110 may cease displaying the visual object 2231 within the user interface 311 in response to the sweeping input 2232, and display a visual object 2233 for including information on the second electronic ticket among the multiple electronic tickets and displaying the second electronic ticket within the user interface 311. Although not illustrated in FIG. 22, in response to another sweeping input such as the sweeping input 2232, the processor 110 may cease displaying the visual object 2233 within user interface 311, and display a visual object 2234 for including information on a third electronic ticket among the multiple electronic tickets and displaying the third electronic ticket within the user interface 311, in the user interface 311.

As described above, the electronic device 100 may display at least one executable object for defining a method of displaying, in the user interface of the second software application, the multiple electronic tickets (or a method of managing the multiple electronic tickets through the second software application). The electronic device 100 may provide an electronic ticket management service suitable for a user of the electronic device 100 through the display of the executable object.

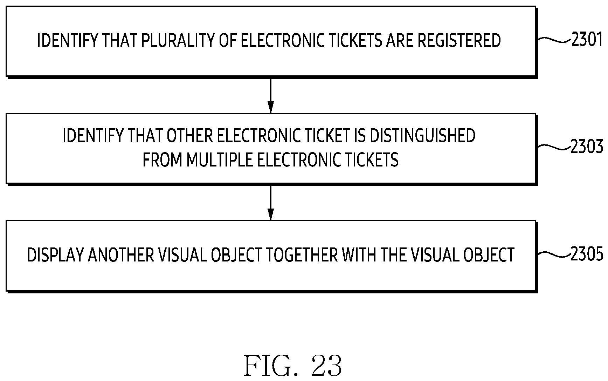

FIG. 23 is a flowchart illustrating a method of displaying another visual object together with a visual object, according to an embodiment. This method may be executed by the electronic device 100 illustrated in FIG. 1 or the processor 110 in the electronic device 100.

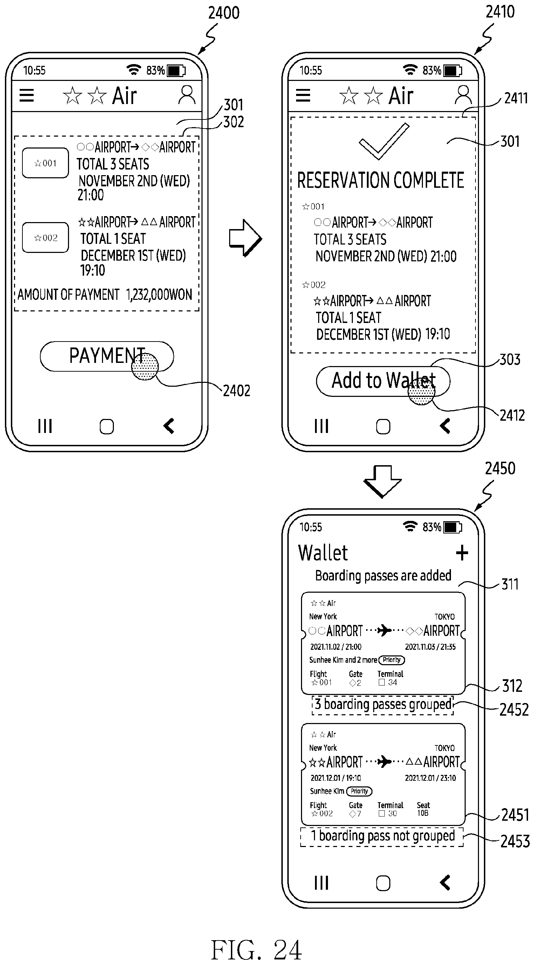

FIG. 24 illustrates an example of another visual object displayed together with a visual object according to an embodiment.

Referring to FIG. 23, in operation 2301, the processor 110 may identify that a plurality of electronic tickets issued through the first software application are registered in the second software application. For example, the plurality of electronic tickets may include the multiple electronic tickets that may be grouped through the visual object, and other electronic tickets that cannot be grouped with the multiple electronic tickets through the visual object. For example, the expression that the other electronic ticket and the multiple electronic tickets are included in the plurality of electronic tickets is for convenience of description, and whether the multiple electronic tickets and the other electronic ticket are included in the plurality of electronic tickets may be identified through operation 2303, which will be described later. However, it is not limited thereto.

For example, referring to FIG. 24, in the state 2400, the processor 110 may receive a user input 2402 for executing payment of the plurality of electronic tickets including the other electronic ticket and the multiple electronic tickets within the user interface 301 of the first software application. The processor 110 may change the state 2400 to the state 2410 in response to the user input 2402. For example, in the state 2410, the processor 110 may display information 2411 indicating that the reservation of the multiple electronic tickets among the plurality of electronic tickets and the reservation of the other electronic ticket among the plurality of electronic tickets are completed, in the user interface 301. For example, in the state 2410, the processor 110 may further display an executable object 303 for registering the plurality of electronic tickets in the second software application, together with the information 2411, within the user interface 301. For example, the processor 110 may receive a user input 2412 for the executable object 303. The processor 110 may identify that the plurality of electronic tickets are registered within the second software application based on user input 2412.

Referring back to FIG. 23, in operation 2303, the processor 110 may identify that the other electronic ticket among the plurality of electronic tickets is distinguished from the multiple electronic tickets among the plurality of electronic tickets, based on identifying that the plurality of electronic tickets are registered within the second software application. For example, the processor 110 may obtain a first information on the multiple electronic tickets and a second information on the other electronic ticket in response to the identification in operation 2301, and identify whether or not the other electronic ticket are distinguished from the multiple electronic tickets based on the first information and the second information. For example, when the multiple electronic tickets and the other electronic ticket are electronic boarding passes, the processor 110 may identify that the flight journey and schedule of the multiple electronic tickets are different from the flight journey and schedule of the other electronic ticket, based on the first information and the second information. The processor 110 may identify that the other electronic ticket are distinguished from the multiple electronic tickets based on the identification.

In operation 2305, the processor 110 may display another visual object including information on the other ticket and providing the other electronic ticket in the user interface, based on executing the second software application after identifying that the other electronic ticket are distinct from the multiple electronic tickets, within the user interface of the second software application, through display 140, together with the visual object. For example, referring to FIG. 24, the processor 110 may change the state 2410 to the state 2450, in response to the user input 2412. For example, in the state 2450, the processor 110 may display other visual object 2451 including information on the other electronic ticket together with the visual object 312 within the user interface 311. For example, in the state 2450, the user interface 311 may further include a text 2452 indicating that the multiple electronic tickets are grouped and a text 2453 indicating that the other electronic ticket are not grouped with the multiple electronic tickets. For example, the text 2452 may be displayed under conditions of displaying the other visual object 2451 together with the visual object 312. However, it is not limited thereto. For example, the text 2452 may be displayed under conditions of displaying the visual object 312 among the visual object 312 and the other visual object 2451. For example, the text 2453 may be displayed under conditions of displaying the other visual object 2451 together with the visual object 312.

As described above, the electronic device 100 may identify the association of electronic tickets registered in the second software application, indicates that another portion of the electronic tickets is not grouped with a portion of the electronic tickets under the condition the portion of the electronic tickets are not associated with the other portion of the electronic tickets, and display another visual object for displaying the other portion of the electronic tickets in the user interface, within the user interface. The electronic device 100 may provide an enhanced electronic ticket management service through the display of the other visual object.

According to an embodiment, the electronic device, the method, and the non-transitory computer-readable storage medium can provide an enhanced user experience by displaying the visual object which includes integration information of multiple electronic tickets and is used for providing the multiple electronic tickets.

As described above, according to an embodiment, an electronic device may include a display, a memory configured to store instructions, a processor. The processor may be configured to, when the instructions are executed, identify that multiple electronic tickets for multiple users is registered in a second software application, the multiple electronic tickets issued through a first software application. The processor may be configured to, when the instructions are executed, execute the second software application after the identification. The processor may be configured to, when the instructions are executed, display, based on the execution of the second software application, a visual object for providing the multiple electronic tickets in a user interface of the second software application via the display, wherein the visual object includes integration information of the multiple electronic tickets in a user interface of the second software application.

In an embodiment, the multiple electronic tickets may include a first electronic ticket for a first user. In an embodiment, the integration information may include first data that is common data of the multiple electronic tickets and second data that summarizes unique data in remaining electronic tickets among the multiple electronic tickets based on unique data in the first electronic ticket. In an embodiment, the unique data of the first electronic ticket may include data regarding the first user in the first electronic ticket.

In an embodiment, the processor may be further configured to, when the instructions are executed, based on executing the second software application after identifying that a single electronic ticket for a single user is registered in the second software application, display, another visual object for the single electronic ticket in the user interface, in the user interface, the single electronic ticket issued through the first software application. In an embodiment, the visual object may further include a visual affordance for indicating to provide information regarding the multiple electronic tickets through the visual object rather than the other visual object. In an embodiment, the visual affordance may include a stack element aggregated in an overlapping arrangement.

In an embodiment, the visual object may be configured with card shaped stack elements that are aggregated in an overlapping arrangement. In an embodiment, the other visual object may be configured with a single card shaped element. In an embodiment, a first card shaped stack element among the card shaped stack elements may include the integration information.

In an embodiment, background color of the visual object may be different from background color of the other visual object.

In an embodiment, the multiple electronic tickets may be multiple electronic boarding passes for the multiple users. In an embodiment, the processor may be configured to, when the instructions are executed, identify, in response to a user input for registering the multiple electronic boarding passes in the second software application, that the multiple electronic boarding passes are associated with each other, based on passenger name record (PNR) code. In an embodiment, the processor may be configured to, when the instructions are executed, display the visual object, based on identifying that the multiple electronic boarding passes are associated with each other.

In an embodiment, the processor may be configured to, when the instructions are executed, display, in response to an input on the visual object, at least portion of unique data of a first electronic ticket among the multiple electronic tickets in the user interface, via the display. In an embodiment, the processor may be configured to, when the instructions are executed, display, in response to a first sweeping input that a touch input contacted on the display that displays the at least portion of the unique data of the first electronic ticket is moved in a first direction by a first distance and is released, at least portion of unique data of a second electronic ticket among the multiple electronic tickets in the user interface, via the display. In an embodiment, the processor may be configured to, when the instructions are executed, display, in response to a second sweeping input that a touch input contacted on the display that displays the at least portion of the unique data of the first electronic ticket is moved in the first direction by a second distance longer than the first distance and is released, at least portion of common data of the multiple electronic tickets in the user interface, via the display. In an embodiment, the visual object may be pinned, independently from the first sweeping input and the second sweeping input.

In an embodiment, the visual object may be displayed with an executable object. In an embodiment, the processor may be configured to, when the instructions are executed, in response to an input on the executable object, cease to display the visual object in the user interface and display information regarding the first electronic ticket in the user interface, via the display. In an embodiment, the processor may be configured to, when the instructions are executed, in response to a third sweeping input that a touch input contacted on the display that displays the information regarding the first electronic ticket is moved in a second direction different from the first direction and is released, cease to display the information regarding the first electronic ticket and display information regarding the second electronic ticket in the user interface, via the display. In an embodiment, each of the information regarding the first electronic ticket and the information regarding the second electronic ticket may include a bar code for identifying each of the first electronic ticket and the second electronic ticket.

In an embodiment, each of the information regarding the first electronic ticket and the information regarding the second electronic ticket may be displayed with page indicators.

In an embodiment, the processor may be configured to, when the instructions are executed, display, in the user interface, an executable object for transmitting to other electronic devices information regarding the multiple electronic tickets, with the at least portion of the unique data of the first electronic ticket, via the display. In an embodiment, the processor may be configured to, when the instructions are executed, obtain, in response to an input on the executable object, account information of remaining users except a user of the electronic device among the multiple users. In an embodiment, the processor may be configured to, when the instructions are executed, display a user interface of a third software application that includes a recipient input field to which the account information is inputted. In an embodiment, the third software application may be a software application that is executed in response to the input and is identified for transmitting the information.

In an embodiment, the processor may be configured to, when the instructions are executed, identify information regarding the multiple electronic tickets, based on the identification. In an embodiment, the processor may be configured to, when the instructions are executed, obtain, based on the identified information, account information regarding the multiple users through the third software application stored in the electronic device. In an embodiment, the processor may be configured to, when the instructions are executed, obtain, based on the account information, thumbnail images respectively representing the multiple users. In an embodiment, the processor may be configured to, when the instructions are executed, display the visual object further including the thumbnail images. In an embodiment, the electronic device may further include a communication circuit. In an embodiment, the processor may be configured to, when the instructions are executed, receive from an external electronic device a signal for indicating that a state of an electronic ticket among the multiple electronic tickets is changed after the identification, via the communication circuit. In an embodiment, the processor may be configured to, when the instructions are executed, replace a thumbnail image representing a user of the electronic ticket among the thumbnail images that are included in the visual object with a visual element indicating the changed state of the electronic ticket, based on the signal.

In an embodiment, the processor may be configured to, when the instructions are executed, display, in the user interface, an executable object for providing another electronic ticket that has type different from type of the multiple electronic tickets and are associated with at least portion of the multiple electronic tickets in the user interface, with the visual object, via the display. In an embodiment, the processor may be configured to, when the instructions are executed, display, in the user interface, the other electronic ticket, in response to an input on the executable object. In an embodiment, an appearance of the executable object may correspond to the other electronic ticket that is reduced.

In an embodiment, the processor may be configured to, when the instructions are executed, obtain, in response to the identification, common data for the multiple electronic tickets and unique data of each of the multiple electronic tickets. In an embodiment, the processor may be configured to, when the instructions are executed, identify, based on the common data and the unique data, that the multiple electronic tickets are associated with each other. In an embodiment, the processor may be configured to, when the instructions are executed, display the visual object, based on identifying that the multiple electronic tickets are associated with each other.

In an embodiment, the visual object may be a first visual object. In an embodiment, the processor may be configured to, when the instructions are executed, in response to the execution of the second software application, display, in the user interface, at least one executable object for inquiring a method that provides the multiple electronic tickets in the user interface, via the display. In an embodiment, the processor may be configured to, when the instructions are executed, display, in the user interface, the visual object, via the display, in response to a first input on the at least one executable object. In an embodiment, the processor may be configured to, when the instructions are executed, display, in the user interface, in response to a second input on the at least one executable object, a second visual object for providing a first electronic ticket in the user interface via the display, wherein the second visual object includes information regarding a first electronic ticket among the multiple electronic tickets.

In an embodiment, the processor may be configured to, when the instructions are executed, in response to a sweeping input that a touch input contacted on the display displaying the second visual object is moved and is released, cease the display of the second visual object and display, in the user interface, a third visual object including information regarding a second electronic ticket among the multiple electronic tickets, via the display, the third visual object for providing the second electronic ticket in the user interface.

In an embodiment, the processor may be configured to, when the instructions are executed, identify that other electronic tickets and multiple electronic tickets issued through the first software application are registered in the second software application. In an embodiment, the processor may be configured to, when the instructions are executed, identify that the other electronic tickets are distinguished from the multiple electronic tickets, based on identifying that the other electronic tickets and the multiple electronic tickets are registered. In an embodiment, the processor may be configured to, when the instructions are executed, display another visual object including information on the other electronic tickets and providing the other electronic tickets within the user interface, together with the visual object, through the display, in the user interface, based on executing the second software application after identifying that the other electronic tickets are distinct from the multiple electronic tickets.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a memory configured to store instructions; and
a processor,
wherein the processor is configured to, when the instructions are executed:
identify that multiple electronic tickets for multiple users is registered in a second software application, the multiple electronic tickets issued through a first software application;
execute the second software application after the identification;
display, based on the execution of the second software application, a visual object for providing the multiple electronic tickets in a user interface of the second software application via the display, wherein the visual object includes integration information for the multiple electronic tickets in the user interface of the second software application.

2. The electronic device of claim 1, wherein the multiple electronic tickets include a first electronic ticket for a first user, and
wherein the integration information includes first data that is common data of the multiple electronic tickets and second data that summarizes unique data in remaining electronic tickets among the multiple electronic tickets based on unique data in the first electronic ticket.

3. The electronic device of claim 2, wherein the unique data of the first electronic ticket includes data regarding the first user in the first electronic ticket.

4. The electronic device of claim 1, wherein the processor is further configured to, when the instructions are executed:
based on executing the second software application after identifying that a single electronic ticket for a single user is registered in the second software application, display, in the user interface, another visual object for the single electronic ticket in the user interface, the single electronic ticket issued through the first software application.

5. The electronic device of claim 4, wherein the visual object further includes a visual affordance for indicating to provide information regarding the multiple electronic tickets through the visual object rather than the other visual object, and
wherein the visual affordance includes a stack element aggregated in an overlapping arrangement.

6. The electronic device of claim 4, wherein the visual object is configured with card shaped stack elements that are aggregated in an overlapping arrangement,
wherein the other visual object is configured with a single card shaped element, and
wherein a first card shaped stack element among the card shaped stack elements includes the integration information.

7. The electronic device of claim 4, wherein background color of the visual object is different from background color of the other visual object.

8. The electronic device of claim 1, wherein the multiple electronic tickets are multiple electronic boarding passes for the multiple users, and
wherein the processor is configured to, when the instructions are executed:
identify, in response to a user input for registering the multiple electronic boarding passes in the second software application, that the multiple electronic boarding passes are associated with each other, based on passenger name record (PNR) code; and
display the visual object, based on identifying that the multiple electronic boarding passes are associated with each other.

9. The electronic device of claim 1, wherein the processor is further configured to, when the instructions are executed:
display, in response to an input on the visual object, at least portion of unique data of a first electronic ticket among the multiple electronic tickets in the user interface, via the display;
display, in response to a first sweeping input that a touch input contacted on the display that displays the at least portion of the unique data of the first electronic ticket is moved in a first direction by a first distance and is released, at least portion of unique data of a second electronic ticket among the multiple electronic tickets in the user interface, via the display; and
display, in response to a second sweeping input that a touch input contacted on the display that displays the at least portion of the unique data of the first electronic ticket is moved in the first direction by a second distance longer than the first distance and is released, at least portion of common data of the multiple electronic tickets in the user interface, via the display.

10. The electronic device of claim 9, wherein the visual object is pinned, independently from the first sweeping input and the second sweeping input.

11. The electronic device of claim 9, wherein the visual object is displayed with an executable object, and
wherein the processor is further configured to, when the instructions are executed:
in response to an input on the executable object, cease to display the visual object in the user interface and display information regarding the first electronic ticket in the user interface, via the display; and
in response to a third sweeping input that a touch input contacted on the display that displays the information regarding the first electronic ticket is moved in a second direction different from the first direction and is released, cease to display the information regarding the first electronic ticket and display information regarding the second electronic ticket in the user interface, via the display.

12. The electronic device of claim 11, wherein each of the information regarding the first electronic ticket and the information regarding the second electronic ticket includes a bar code for identifying each of the first electronic ticket and the second electronic ticket.

13. The electronic device of claim 11, where each of the information regarding the first electronic ticket and the information regarding the second electronic ticket is displayed with page indicators.

14. The electronic device of claim 9, wherein the processor is further configured to, when the instructions are executed:
display, in the user interface, an executable object for transmitting to other electronic devices information regarding the multiple electronic tickets, with the at least portion of the unique data of the first electronic ticket, via the display;
obtain, in response to an input on the executable object, account information of remaining users except a user of the electronic device among the multiple users; and
display a user interface of a third software application that includes a recipient input field to which the account information is inputted, and
wherein the third software application is a software application that is executed in response to the input and is identified for transmitting the information.

15. The electronic device of claim 1, wherein the processor is further configured to, when the instructions are executed:
identify information regarding the multiple electronic tickets, based on the identification;
obtain, based on the identified information, account information regarding the multiple users through the third software application stored in the electronic device;
obtain, based on the account information, thumbnail images respectively representing the multiple users; and
display the visual object further including the thumbnail images.
